# EUROPEAN PATENT APPLICATION

(11) **EP 4 340 464 A1**
(43) Date of publication of application: **20.03.2024**
(21) Application number: 22827477.5
(22) Date of filing: 17.06.2022
(51) Int. Cl.: H04W 52/02

(54) **COMMUNICATION METHOD AND RELATED APPARATUS**

(30) Priority: 25.06.2021 CN 202110713686
(71) Applicant: Huawei Technologies Co., Ltd., Shenzhen, Guangdong 518129 (CN)
(72) Inventor: LI, Chenwan, Shenzhen, Guangdong 518129 (CN); WU, Yiling, Shenzhen, Guangdong 518129 (CN); LU, Zhenwei, Shenzhen, Guangdong 518129 (CN)
(74) Representative: Maiwald GmbH
(86) International application number: PCT/CN2022/099339
(87) International publication number: WO 2022/267982

(57) **Abstract**

Embodiments of this application disclose a communication method and a related apparatus. The method includes: receiving first information from an access network device; entering a first state based on the first information; receiving, in the first state, wake-up information from the access network device, and skipping receiving, in the first state, one or more pieces of the following information from the access network device: a paging message, a synchronization signal, or a system message; and leaving the first state based on the wake-up information, and receiving the one or more pieces of information from the access network device; or leaving the first state based on the wake-up information, and initiating a random access request. With the low-power first state introduced, power consumption of a terminal device is reduced. The terminal device may further monitor the wake-up information through a low-power transceiver circuit to further reduce power consumption of the terminal device.

## Description

This application claims priority to Chinese Patent Application No. 202110713686.9, filed with the China National Intellectual Property Administration on June 25, 2021 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

In a mobile communication system, paging from a core network of a 5th generation (5G) mobile communication technology is referred to as 5GC paging (paging). When downlink data arrives at user equipment (user equipment, UE) in an idle state (RRC_IDLE state), the 5GC triggers paging of the UE. The user equipment is also referred to as a terminal device or a terminal. A final paging message is delivered by a network device (for example, a next generation NodeB (Next Generation NodeB, gNB)) to the UE through an air interface. In a paging procedure, the network device periodically sends a paging message to the UE, to notify the UE to perform a corresponding operation or update a related parameter. The UE can receive the paging message when being in the idle state (RRC_IDLE), an inactive state (RRC-INACTIVE), or a connected state (RRC_CONNECTED).

An existing terminal in the idle state or the inactive state still needs to periodically monitor paging, and perform measurement or other operations. This poses a high power consumption problem for a terminal (for example, a wearable device) that requires ultra-low power consumption. To resolve this problem, a wake up signal (wake up signal, WUS) technology is further introduced in the 5G technology. In the WUS technology, first, a terminal device negotiates with a network device about a time for monitoring a WUS. Second, the terminal device monitors the WUS before a paging occasion (paging occasion, PO) corresponding to each discontinuous reception (Discontinuous Reception, DRX) cycle. The WUS indicates that the terminal is to be paged in a subsequent PO. The terminal that detects the WUS monitors a physical downlink control channel (Physical Downlink Control Channel, PDCCH) in one or more POs after the WUS, and receives a paging message.

However, in the WUS technology, the terminal still needs to enable a monitoring function, so that the WUS can be successfully monitored. Therefore, the problem of high power consumption still exists.

### SUMMARY

Embodiments of this application provide a communication method. With a low-power first state introduced, power consumption of a terminal device is reduced. The terminal device in the first state may be woken up in a plurality of manners, to ensure normal running of a service of the terminal device. Compared with an existing WUS technology, time for monitoring a PDCCH is reduced for the terminal device, and power consumption of the terminal device is further reduced. The terminal device may further monitor wake-up information through a low-power transceiver circuit to further reduce power consumption of the terminal device.

According to a first aspect, an embodiment of this application proposes a communication method applied to a terminal device. The method includes: First, a terminal device receives first information from an access network device. Then, the terminal device enters a first state based on the first information. The terminal device in the first state receives wake-up information from the access network device, and the terminal device in the first state does not receive one or more pieces of the following information from the access network device: a paging message, a synchronization signal, or a system message. The terminal device leaves the first state based on the wake-up information, and the terminal device receives the one or more pieces of information from the access network device. Alternatively, the terminal device leaves the first state based on the wake-up information, and initiates a random access request.

Specifically, the terminal device in the first state does not receive one or more of the following information from the access network device: a paging message, a synchronization message, a system message, or a reference signal. The terminal device in the first state receives the wake-up information. The wake-up information includes but is not limited to a wake up signal (wake up signal), a wake-up indication (wake up indicator), or another indication. Optionally, a low-power transceiver circuit in the terminal device is configured to receive the wake-up information. Optionally, the terminal device in the first state does not receive downlink data other than the wake-up information.

In a possible implementation, the first state is a subset of an idle state. The first state and the idle state that is defined in an existing protocol jointly form an idle state. In this embodiment of this application, the idle state defined in the existing protocol is referred to as a normal idle state. Specifically, a status of the terminal device may be divided into a connected state and an idle state. The idle state includes the first state and the normal idle state. It should be noted that the status of the terminal device refers to a connection status of signaling between the terminal device and an access and mobility management function (access and mobility management function, AMF). The normal idle state may also be referred to as an awake state (awake state), and the first state may also be referred to as a doze state (doze state).

In another possible implementation, the first state is parallel to the normal idle state, and the first state, the idle state, and the connected state jointly form the status of the terminal device. The status of the terminal device may be divided into the first state, the connected state, and the idle state. The idle state is the idle state defined in the existing protocol. It should be noted that the status of the terminal device refers to a connection status of signaling between the terminal device and the AMF.

In another possible implementation, the first state is parallel to a normal inactive state, and the first state, the inactive state, the idle state, and the connected state jointly form the status of the terminal device. The inactive state is also referred to as an inactive mode. The inactive state may also be referred to as the "normal inactive state", and the first state may also be referred to as the doze state or a sleep state. It should be noted that the first state of the terminal device refers to a connection state of signaling between the terminal device and the access network device.

In this embodiment of this application, with the low-power first state introduced, power consumption of the terminal device is reduced. The terminal device in the first state may be woken up in a plurality of manners, to ensure normal running of a service of the terminal device. Compared with an existing WUS technology, time for monitoring a PDCCH is reduced for the terminal device, and power consumption of the terminal device is further reduced. The terminal device may further monitor the wake-up information through the low-power transceiver circuit to further reduce power consumption of the terminal device.

In a possible implementation, the terminal device in the first state skips performing intra-frequency measurement, inter-frequency measurement, cell measurement, and/or cell reselection. Behavior of the terminal device in the first state is limited, so that power consumption of the terminal device is further reduced.

In a possible implementation, the first state is similar to a powered-off state for the terminal device. The terminal device in the first state maintains registration with a core network device and an air interface configuration, where the air interface configuration includes but is not limited to a priority configuration. The terminal device in the first state does not perform idle-state behavior such as intra-frequency measurement, inter-frequency measurement, cell measurement, and/or cell reselection. Behavior of the terminal device in the first state is limited, so that power consumption of the terminal device is further reduced.

In another possible implementation, the first state is similar to a powered-off state for the terminal device. The terminal device in the first state maintains registration with the core network device and an air interface configuration, where the air interface configuration includes but is not limited to a priority configuration. The terminal device in the first state performs idle-state behavior such as relaxed intra-frequency measurement, relaxed inter-frequency measurement, relaxed cell measurement, and/or relaxed cell reselection. The relaxed intra-frequency measurement/inter-frequency measurement/cell measurement means that, compared with intra-frequency measurement/inter-frequency measurement/cell measurement in the idle state or the inactive state defined in the existing protocol, the relaxed intra-frequency measurement/inter-frequency measurement/cell measurement has a longer measurement period, for example, a quantity of DRX cycles for measurement is larger. The relaxed cell reselection means that, compared with cell reselection in an idle state or an inactive state defined in the existing protocol, the relaxed cell reselection has a lower threshold for triggering cell reselection or triggering cell measurement. Behavior of the terminal device in the first state is limited, so that power consumption of the terminal device is further reduced.

In a possible implementation, a first request message is sent to the access network device, where the first request message is used to request to configure the first state. The first request message includes one or more pieces of the following information: a request for configuration of duration of a timer of the first state, or a request for configuration of N paging occasions. A destination of the first request message is the core network device. First configuration information is received from the access network device, where the first configuration information includes one or more pieces of the following information: the duration of the timer of the first state, a group identifier of the terminal device, an identifier of the terminal device, or the N paging occasions. The first configuration information is determined by the core network device based on the first request message. The terminal device may request a network side to configure the first state, to avoid a case that the terminal device cannot enter the first state due to incompatibility between the terminal device and the network side, or that the terminal device cannot leave the first state because the terminal device moves to an area that does not support the first state.

For example, the first request message may be carried in a registration request (registration request), or the first request message may be carried in a tracking area update (tracing area update, TAU) request.

After receiving the first request message, the access network device forwards the first request message to the core network device. The core network device may be an access and mobility management function (access and mobility management function, AMF), or may be a network element or a network function of another core network. This is not limited herein.

Specifically, the first state is configured for the terminal device corresponding to the identifier of the terminal device. For example, when the identifier of the terminal device included in the first configuration information is "UE1", the first state is configured based on the first configuration information for the terminal device (for example, a terminal device 1) corresponding to the identifier "UE1" of the terminal device.

Alternatively, the first state is configured for one or more terminal devices corresponding to the group identifier of the terminal device. For example, when the group identifier of the terminal device included in the first configuration information is "group 1", the first state is configured based on the first configuration information for terminal devices (for example, a terminal device 1, a terminal device 2, and a terminal device 3) corresponding to the group identifier "group1".

Optionally, the duration of the timer of the first state may be the same as duration of a TAU timer (timer).

Optionally, the duration of the timer of the first state may also be related to an actual service, that is, may be equal to a service arrival period.

For example, the first configuration information may be carried in a registration accept message, or the first configuration information may be carried in a tracking area update accept message. This is not limited herein.

In a possible implementation, the terminal device sends second information to the access network device, where the second information indicates one or more pieces of the following information: information about whether configuration of the first state is supported; a processing delay after the wake-up information from the access network device is received; or a minimum time period from receiving the wake-up information from the access network device to receiving the paging message. The terminal device may report capability information (namely, the second information) of the terminal device to the network side, to avoid the case that the terminal device cannot enter the first state due to incompatibility between the terminal device and the network side.

In a possible implementation, the terminal device includes a low-power transceiver circuit. The low-power transceiver circuit is configured to receive the wake-up information. The processing delay after the terminal device receives the wake-up information from the access network device is a time period in which the low-power transceiver circuit receives the wake-up information, processes the wake-up information, and sends an activation command to a main circuit of the terminal device.

The minimum time period from receiving, by the terminal device, the wake-up information from the access network device to receiving the paging message from the access network device is a minimum time period required for processing the wake-up information after the terminal device receives the wake-up information and before the terminal device receives the paging message.

The second information may further include one or more pieces of the following information:
information about whether the terminal device supports receiving the wake-up information, information about whether the terminal device supports leaving the first state based on the wake-up information, a minimum processing time period required by the low-power transceiver circuit in the terminal device to send the activation command to the main circuit of the terminal device, information about whether the terminal device supports configuration of the first state based on the group identifier (that is, whether the terminal device supports configuration of the first state based on a group), or a paging probability range of the terminal device. The paging probability range indicates that a probability that the terminal device is paged falls within the range interval.

For example, the processing delay after the terminal device receives the wake-up information from the access network device may be 20 milliseconds (ms), 40 ms, 240 ms, 1000 ms, or 2000 ms.

The second information may be carried in terminal device capability information (UECapability Information).

In a possible implementation, the first information further indicates one or more pieces of the following information: a cell identifier, and information about whether a cell determined by the cell identifier supports sending the wake-up information; or a frequency identifier, and information about whether a cell determined by the frequency identifier supports the terminal device in the first state. This prevents a terminal device that does not support entering the first state from entering the first state, and reduces signaling overheads.

Optionally, the first information may further include a paging probability, and the first information indicates a terminal device with the same paging probability to enter the first state. For example, when the paging probability included in the first information is 0.75, a terminal device whose paging probability is 0.75 in terminal devices that receive the first information enters the first state. For another example, when the paging probability included in the first information is (0.75-1], a terminal device, in the terminal devices that receive the first information, whose paging probability is within the (0.75-1] interval enters the first state.

Optionally, the first information may be carried in an RRC release message, or the first information is an RRC connection release message.

In a possible implementation, the wake-up information includes one or more of the following: the identifier of the terminal device, an identifier of a group to which the terminal device belongs, or the paging probability range. The paging probability range indicates that a probability that the terminal device is paged falls within the range interval. The terminal device is identified in a plurality of manners, thereby improving implementation flexibility of the solution. Signaling overheads can be reduced, and a delay of waking up the terminal device can be reduced.

Specifically, the identifier of the terminal device may be a 5G globally unique temporary identity (5G Globally Unique Temporary UE Identity, 5G-GUTI). The 5G-GUTI includes a globally unique AMF identifier (globally unique AMF identifier, GUAMI) and a 5G temporary mobile subscriber identity (5G Temporary Mobile Subscriber Identity, 5G-TMSI). The GUAMI indicates an AMF that provides a service for the terminal device.

Alternatively, the identifier of the terminal device may be a 5G-S-TMSI, and the 5G-S-TMSI is a shortened form compared with the 5G-GUTI. The 5G-S-TMSI includes an identifier (AMF set ID) of a set to which the AMF belongs, an AMF pointer (AMF pointer), and the 5G-TMSI.

The group identifier of the terminal device may be a service identifier allocated by the core network device based on a service (service). Terminal devices of a same service are grouped into a same group.

Alternatively, the group identifier of the terminal device may be a session identifier allocated by the core network device based on a session (session). Terminal devices that use a same session are grouped into a same group.

Alternatively, the group identifier of the terminal device may be a group identifier allocated by the core network device based on the paging probability of the terminal device. Terminal devices in a same paging probability range are grouped into a same group. The paging probability range indicates that a probability that the terminal device is paged falls within the range interval.

In a possible implementation, when the terminal device enters the idle state from the connected state or enters the inactive state from the connected state, if the timer of the first state does not expire, the terminal device enters the first state. Because the counter of the first state does not expire, the terminal device may continue to enter the first state. This further reduces power consumption of the terminal device.

According to a second aspect, an embodiment of this application proposes a communication method applied to a terminal device. The method includes: receiving first information from an access network device; entering a first state based on the first information; and in the first state, when a timer of the first state expires, leaving the first state, and receiving one or more pieces of information; or in the first state, leaving the first state when receiving no wake-up information in N consecutive paging occasions, and receiving one or more pieces of information, where N is a positive integer, N indicates a maximum quantity of consecutive paging occasions for the terminal device, and the wake-up information indicates to leave the first state.

Specifically, in the first state, when the timer of the first state of the terminal device expires, and the terminal device receives no wake-up information from the access network device, the terminal device leaves the first state.

When the terminal device in the first state receives no wake-up information from the access network device in the N consecutive paging occasions (or in N paging cycles), the terminal device leaves the first state, where N is a positive integer.

After leaving the first state, the terminal device may directly access a network. For example, when the wake-up information includes the identifier of the terminal device, the terminal device directly accesses the network based on the identifier of the terminal device. When the wake-up information includes a group identifier of the terminal device, the terminal device directly accesses the network based on the group identifier of the terminal device.

After leaving the first state, the terminal device may alternatively receive a paging message from the access network device, and initiate a network access procedure. For example, when the wake-up information includes the group identifier of the terminal device, the terminal device that receives the wake-up information first determines whether the terminal device belongs to a group corresponding to the group identifier. If the terminal device belongs to the group corresponding to the group identifier, the terminal device monitors a paging message. When the paging message includes the identifier of the terminal device, the terminal device initiates the network access procedure; or when the paging message does not include the identifier of the terminal device, the terminal device continues to maintain the first state.

In this embodiment of this application, with the low-power first state introduced, power consumption of the terminal device is reduced. The terminal device in the first state may be woken up in a plurality of manners, to ensure normal running of a service of the terminal device. Compared with an existing WUS technology, time for monitoring a PDCCH is reduced for the terminal device, and power consumption of the terminal device is further reduced. The terminal device may further monitor the wake-up information through a low-power transceiver circuit to further reduce power consumption of the terminal device.

In a possible implementation, in the first state, intra-frequency measurement, inter-frequency measurement, cell measurement, and/or cell reselection are not performed. Behavior of the terminal device in the first state is limited, so that power consumption of the terminal device is further reduced.

In a possible implementation, the first state is similar to a powered-off state for the terminal device. The terminal device in the first state maintains registration with a core network device and an air interface configuration, where the air interface configuration includes but is not limited to a priority configuration. The terminal device in the first state does not perform idle-state behavior such as intra-frequency measurement, inter-frequency measurement, cell measurement, and/or cell reselection. Behavior of the terminal device in the first state is limited, so that power consumption of the terminal device is further reduced.

In another possible implementation, the first state is similar to a powered-off state for the terminal device. The terminal device in the first state maintains registration with the core network device and an air interface configuration, where the air interface configuration includes but is not limited to a priority configuration. The terminal device in the first state performs idle-state behavior such as relaxed intra-frequency measurement, relaxed inter-frequency measurement, relaxed cell measurement, and/or relaxed cell reselection. The relaxed intra-frequency measurement/inter-frequency measurement/cell measurement means that, compared with intra-frequency measurement/inter-frequency measurement/cell measurement in an idle state or an inactive state defined in an existing protocol, the relaxed intra-frequency measurement/inter-frequency measurement/cell measurement has a longer measurement period, for example, a quantity of DRX cycles for measurement is larger. The relaxed cell reselection means that, compared with cell reselection in an idle state or an inactive state defined in the existing protocol, the relaxed cell reselection has a lower threshold for triggering cell reselection or triggering cell measurement. Behavior of the terminal device in the first state is limited, so that power consumption of the terminal device is further reduced.

In a possible implementation, a first request message is sent to the access network device, where the first request message is used to request to configure the first state. The first request message includes one or more pieces of the following information: a request for configuration of duration of the timer of the first state, or a request for configuration of the N paging occasions. A destination of the first request message is the core network device. First configuration information is received from the access network device, where the first configuration information includes one or more pieces of the following information: the duration of the timer of the first state, the group identifier of the terminal device, the identifier of the terminal device, or the N paging occasions. The first configuration information is determined by the core network device based on the first request message. The terminal device may request a network side to configure the first state, to avoid a case that the terminal device cannot enter the first state due to incompatibility between the terminal device and the network side, or that the terminal device cannot leave the first state because the terminal device moves to an area that does not support the first state.

For example, the first request message may be carried in a registration request (registration request), or the first request message may be carried in a tracking area update (tracing area update, TAU) request.

After receiving the first request message, the access network device forwards the first request message to the core network device. The core network device may be an access and mobility management function (access and mobility management function, AMF), or may be a network element or a network function of another core network. This is not limited herein.

Specifically, the first state is configured for the terminal device corresponding to the identifier of the terminal device. For example, when the identifier of the terminal device included in the first configuration information is "UE1", the first state is configured based on the first configuration information for the terminal device (for example, a terminal device 1) corresponding to the identifier "UE1" of the terminal device.

Alternatively, the first state is configured for one or more terminal devices corresponding to the group identifier of the terminal device. For example, when the group identifier of the terminal device included in the first configuration information is "group 1", the first state is configured based on the first configuration information for terminal devices (for example, a terminal device 1, a terminal device 2, and a terminal device 3) corresponding to the group identifier "group1".

Optionally, the duration of the timer of the first state may be the same as duration of a TAU timer (timer).

Optionally, the duration of the timer of the first state may also be related to an actual service, that is, may be equal to a service arrival period.

For example, the first configuration information may be carried in a registration accept message, or the first configuration information may be carried in a tracking area update accept message. This is not limited herein.

In a possible implementation, the terminal device sends second information to the access network device, where the second information indicates one or more pieces of the following information: information about whether configuration of the first state is supported; a processing delay after the wake-up information from the access network device is received; or a minimum time period from receiving the wake-up information from the access network device to receiving the paging message. The terminal device may report capability information (namely, the second information) of the terminal device to the network side, to avoid the case that the terminal device cannot enter the first state due to incompatibility between the terminal device and the network side.

In a possible implementation, the terminal device includes a low-power transceiver circuit. The low-power transceiver circuit is configured to receive the wake-up information. The processing delay after the terminal device receives the wake-up information from the access network device is a time period in which the low-power transceiver circuit receives the wake-up information, processes the wake-up information, and sends an activation command to a main circuit of the terminal device.

The minimum time period from receiving, by the terminal device, the wake-up information from the access network device to receiving the paging message from the access network device is a minimum time period required for processing the wake-up information after the terminal device receives the wake-up information and before the terminal device receives the paging message.

The second information may further include one or more pieces of the following information:
information about whether the terminal device supports receiving the wake-up information, information about whether the terminal device supports leaving the first state based on the wake-up information, a minimum processing time period required by the low-power transceiver circuit in the terminal device to send the activation command to the main circuit of the terminal device, information about whether the terminal device supports configuration of the first state based on the group identifier (that is, whether the terminal device supports configuration of the first state based on a group), or a paging probability range of the terminal device. The paging probability range indicates that a probability that the terminal device is paged falls within the range interval.

For example, the processing delay after the terminal device receives the wake-up information from the access network device may be 20 milliseconds (ms), 40 ms, 240 ms, 1000 ms, or 2000 ms.

The second information may be carried in terminal device capability information (UECapability Information).

In a possible implementation, the first information further indicates one or more pieces of the following information: a cell identifier, and information about whether a cell determined by the cell identifier supports sending the wake-up information; or a frequency identifier, and information about whether a cell determined by the frequency identifier supports the terminal device in the first state. This prevents a terminal device that does not support entering the first state from entering the first state, and reduces signaling overheads.

Optionally, the first information may further include a paging probability, and the first information indicates a terminal device with the same paging probability to enter the first state. For example, when the paging probability included in the first information is 0.75, a terminal device whose paging probability is 0.75 in terminal devices that receive the first information enters the first state. For another example, when the paging probability included in the first information is (0.75-1], a terminal device, in the terminal devices that receive the first information, whose paging probability is within the (0.75-1] interval enters the first state.

Optionally, the first information may be carried in an RRC release message, or the first information is an RRC connection release message.

In a possible implementation, the wake-up information includes one or more of the following: the identifier of the terminal device, an identifier of a group to which the terminal device belongs, or the paging probability range. The paging probability range indicates that a probability that the terminal device is paged falls within the range interval. The terminal device is identified in a plurality of manners, thereby improving implementation flexibility of the solution. Signaling overheads can be reduced, and a delay of waking up the terminal device can be reduced.

Specifically, the identifier of the terminal device may be a 5G globally unique temporary identity (5G Globally Unique Temporary UE Identity, 5G-GUTI). The 5G-GUTI includes a globally unique AMF identifier (globally unique AMF identifier, GUAMI) and a 5G temporary mobile subscriber identity (5G Temporary Mobile Subscriber Identity, 5G-TMSI). The GUAMI indicates an AMF that provides a service for the terminal device.

Alternatively, the identifier of the terminal device may be a 5G-S-TMSI, and the 5G-S-TMSI is a shortened form compared with the 5G-GUTI. The 5G-S-TMSI includes an identifier (AMF set ID) of a set to which the AMF belongs, an AMF pointer (AMF pointer), and the 5G-TMSI.

The group identifier of the terminal device may be a service identifier allocated by the core network device based on a service (service). Terminal devices of a same service are grouped into a same group.

Alternatively, the group identifier of the terminal device may be a session identifier allocated by the core network device based on a session (session). Terminal devices that use a same session are grouped into a same group.

Alternatively, the group identifier of the terminal device may be a group identifier allocated by the core network device based on the paging probability of the terminal device. Terminal devices in a same paging probability range are grouped into a same group. The paging probability range indicates that a probability that the terminal device is paged falls within the range interval.

In a possible implementation, when the terminal device enters the idle state from a connected state or enters the inactive state from a connected state, if the timer of the first state does not expire, the terminal device enters the first state. Because the counter of the first state does not expire, the terminal device may continue to enter the first state. This further reduces power consumption of the terminal device.

According to a third aspect, an embodiment of this application proposes a communication method applied to an access network device, including: sending first information to a terminal device, where the first information indicates the terminal device to enter a first state, the terminal device in the first state receives wake-up information, and the terminal device in the first state skips receiving one or more pieces of the following information from the access network device: a paging message, a synchronization signal, or a system message; and sending the wake-up information to the terminal device, where the wake-up information indicates the terminal device to leave the first state, and the terminal device that leaves the first state receives the one or more pieces of information from the access network device, or the terminal device initiates a random access request.

Specifically, the terminal device in the first state does not receive one or more of the following information from the access network device: a paging message, a synchronization message, a system message, or a reference signal. The terminal device in the first state receives the wake-up information. The wake-up information includes but is not limited to a wake up signal (wake up signal), a wake-up indication (wake up indicator), or another indication. Optionally, a low-power transceiver circuit in the terminal device is configured to receive the wake-up information. Optionally, the terminal device in the first state does not receive downlink data other than the wake-up information.

In a possible implementation, the first state is a subset of an idle state. The first state and the idle state that is defined in an existing protocol jointly form an idle state. In this embodiment of this application, the idle state defined in the existing protocol is referred to as a normal idle state. Specifically, a status of the terminal device may be divided into a connected state and an idle state. The idle state includes the first state and the normal idle state. It should be noted that the status of the terminal device refers to a connection status of signaling between the terminal device and an access and mobility management function (access and mobility management function, AMF). The normal idle state may also be referred to as an awake state (awake state), and the first state may also be referred to as a doze state (doze state).

In another possible implementation, the first state is parallel to the normal idle state, and the first state, the idle state, and the connected state jointly form the status of the terminal device. The status of the terminal device may be divided into the first state, the connected state, and the idle state. The idle state is the idle state defined in the existing protocol. It should be noted that the status of the terminal device refers to a connection status of signaling between the terminal device and the AMF.

In another possible implementation, the first state is parallel to a normal inactive state, and the first state, the inactive state, the idle state, and the connected state jointly form the status of the terminal device. The inactive state is also referred to as an inactive mode. The inactive state may also be referred to as the "normal inactive state", and the first state may also be referred to as the doze state or a sleep state. It should be noted that the first state of the terminal device refers to a connection state of signaling between the terminal device and the access network device.

In this embodiment of this application, with the low-power first state introduced, power consumption of the terminal device is reduced. The terminal device in the first state may be woken up in a plurality of manners, to ensure normal running of a service of the terminal device. Compared with an existing WUS technology, time for monitoring a PDCCH is reduced for the terminal device, and power consumption of the terminal device is further reduced. The terminal device may further monitor the wake-up information through the low-power transceiver circuit to further reduce power consumption of the terminal device.

In a possible implementation, in the first state, intra-frequency measurement, inter-frequency measurement, cell measurement, and/or cell reselection are not performed. Behavior of the terminal device in the first state is limited, so that power consumption of the terminal device is further reduced.

In a possible implementation, the first state is similar to a powered-off state for the terminal device. The terminal device in the first state maintains registration with a core network device and an air interface configuration, where the air interface configuration includes but is not limited to a priority configuration. The terminal device in the first state does not perform idle-state behavior such as intra-frequency measurement, inter-frequency measurement, cell measurement, and/or cell reselection. Behavior of the terminal device in the first state is limited, so that power consumption of the terminal device is further reduced.

In another possible implementation, the first state is similar to a powered-off state for the terminal device. The terminal device in the first state maintains registration with the core network device and an air interface configuration, where the air interface configuration includes but is not limited to a priority configuration. The terminal device in the first state performs idle-state behavior such as relaxed intra-frequency measurement, relaxed inter-frequency measurement, relaxed cell measurement, and/or relaxed cell reselection. The relaxed intra-frequency measurement/inter-frequency measurement/cell measurement means that, compared with intra-frequency measurement/inter-frequency measurement/cell measurement in the idle state or an inactive state defined in the existing protocol, the relaxed intra-frequency measurement/inter-frequency measurement/cell measurement has a longer measurement period, for example, a quantity of DRX cycles for measurement is larger. The relaxed cell reselection means that, compared with cell reselection in the idle state or the inactive state defined in the existing protocol, the relaxed cell reselection has a lower threshold for triggering cell reselection or triggering cell measurement. Behavior of the terminal device in the first state is limited, so that power consumption of the terminal device is further reduced.

In a possible implementation, a first request message sent by the terminal device is received, where the first request message is used to request to configure the first state, and the first request message includes one or more pieces of the following information: a request for configuration of duration of a timer of the first state, or a request for configuration of N paging occasions. The first request message is sent to the core network device. First configuration information is received from the core network device, where the first configuration information is determined by the core network device based on the first request message. The first configuration information is sent to the terminal device. The first configuration information includes one or more pieces of the following information: the duration of the timer of the first state, a group identifier of the terminal device, an identifier of the terminal device, or the N paging occasions. The terminal device may request a network side to configure the first state. The access network device requests, based on the request of the terminal device, the core network device to configure the first state for the terminal device. This avoids a case that the terminal device cannot enter the first state due to incompatibility between the terminal device and the network side, or that the terminal device cannot leave the first state because the terminal device moves to an area that does not support the first state.

For example, the first request message may be carried in a registration request (registration request), or the first request message may be carried in a tracking area update (tracing area update, TAU) request.

After receiving the first request message, the access network device forwards the first request message to the core network device. The core network device may be an access and mobility management function (access and mobility management function, AMF), or may be a network element or a network function of another core network. This is not limited herein.

Specifically, the first state is configured for the terminal device corresponding to the identifier of the terminal device. For example, when the identifier of the terminal device included in the first configuration information is "UE1", the first state is configured based on the first configuration information for the terminal device (for example, a terminal device 1) corresponding to the identifier "UE1" of the terminal device.

Alternatively, the first state is configured for one or more terminal devices corresponding to the group identifier of the terminal device. For example, when the group identifier of the terminal device included in the first configuration information is "group 1", the first state is configured based on the first configuration information for terminal devices (for example, a terminal device 1, a terminal device 2, and a terminal device 3) corresponding to the group identifier "group1".

Optionally, the duration of the timer of the first state may be the same as duration of a TAU timer (timer).

Optionally, the duration of the timer of the first state may also be related to an actual service, that is, may be equal to a service arrival period.

For example, the first configuration information may be carried in a registration accept message, or the first configuration information may be carried in a tracking area update accept message. This is not limited herein.

In a possible implementation, second information sent by the terminal device is received, where the second information indicates one or more pieces of the following information: information about whether the terminal device supports configuration of the first state; a processing delay after the terminal device receives the wake-up information from the access network device; or a minimum time period from receiving the wake-up information from the access network device to receiving the paging message. The terminal device may report capability information (namely, the second information) of the terminal device to the network side. The access network device configures the first state to the terminal device based on the reported capability information of the terminal device. This avoids the case that the terminal device cannot enter the first state due to incompatibility between the terminal device and the network side.

In a possible implementation, the first information further indicates one or more pieces of the following information: a cell identifier, and information about whether a cell determined by the cell identifier supports sending the wake-up information; or a frequency identifier, and information about whether a cell determined by the frequency identifier supports the terminal device in the first state. This prevents a terminal device that does not support entering the first state from entering the first state, and reduces signaling overheads.

Optionally, the first information may further include a paging probability, and the first information indicates a terminal device with the same paging probability to enter the first state. For example, when the paging probability included in the first information is 0.75, a terminal device whose paging probability is 0.75 in terminal devices that receive the first information enters the first state. For another example, when the paging probability included in the first information is (0.75-1], a terminal device, in the terminal devices that receive the first information, whose paging probability is within the (0.75-1] interval enters the first state.

Optionally, the first information may be carried in an RRC release message, or the first information is an RRC connection release message.

In a possible implementation, the wake-up information includes one or more of the following: the identifier of the terminal device, an identifier of a group to which the terminal device belongs, or the paging probability range. The paging probability range indicates that a probability that the terminal device is paged falls within the range interval. The terminal device is identified in a plurality of manners, thereby improving implementation flexibility of the solution. Signaling overheads can be reduced, and a delay of waking up the terminal device can be reduced. Specifically, the identifier of the terminal device may be a 5G globally unique temporary identity (5G Globally Unique Temporary UE Identity, 5G-GUTI). The 5G-GUTI includes a globally unique AMF identifier (globally unique AMF identifier, GUAMI) and a 5G temporary mobile subscriber identity (5G Temporary Mobile Subscriber Identity, 5G-TMSI). The GUAMI indicates an AMF that provides a service for the terminal device.

Alternatively, the identifier of the terminal device may be a 5G-S-TMSI, and the 5G-S-TMSI is a shortened form compared with the 5G-GUTI. The 5G-S-TMSI includes an identifier (AMF set ID) of a set to which the AMF belongs, an AMF pointer (AMF pointer), and the 5G-TMSI.

The group identifier of the terminal device may be a service identifier allocated by the core network device based on a service (service). Terminal devices of a same service are grouped into a same group.

Alternatively, the group identifier of the terminal device may be a session identifier allocated by the core network device based on a session (session). Terminal devices that use a same session are grouped into a same group.

Alternatively, the group identifier of the terminal device may be a group identifier allocated by the core network device based on the paging probability of the terminal device. Terminal devices in a same paging probability range are grouped into a same group. The paging probability range indicates that a probability that the terminal device is paged falls within the range interval.

According to a fourth aspect, an embodiment of this application proposes a communication method applied to an access network device, including: sending first information to a terminal device, where the first information indicates the terminal device to enter a first state, the terminal device in the first state receives wake-up information, and the terminal device in the first state skips receiving one or more pieces of the following information from the access network device: a paging message, a synchronization signal, or a system message; and the terminal device in the first state leaves the first state when a timer of the first state expires, and receives the one or more pieces of information; or the terminal device in the first state leaves the first state when receiving no wake-up information from the access network device in N consecutive paging occasions, and receives the one or more pieces of information, where N is a positive integer, N indicates a maximum quantity of consecutive paging occasions for the terminal device, and the wake-up information indicates to leave the first state.

Specifically, in the first state, when the timer of the first state of the terminal device expires, and the terminal device receives no wake-up information from the access network device, the terminal device leaves the first state.

When the terminal device in the first state receives no wake-up information from the access network device in the N consecutive paging occasions (or in N paging cycles), the terminal device leaves the first state, where N is a positive integer.

After leaving the first state, the terminal device may directly access a network. For example, when the wake-up information includes an identifier of the terminal device, the terminal device directly accesses the network based on the identifier of the terminal device. When the wake-up information includes a group identifier of the terminal device, the terminal device directly accesses the network based on the group identifier of the terminal device.

After leaving the first state, the terminal device may alternatively receive a paging message from the access network device, and initiate a network access procedure. For example, when the wake-up information includes the group identifier of the terminal device, the terminal device that receives the wake-up information first determines whether the terminal device belongs to a group corresponding to the group identifier. If the terminal device belongs to the group corresponding to the group identifier, the terminal device monitors a paging message. When the paging message includes the identifier of the terminal device, the terminal device initiates the network access procedure; or when the paging message does not include the identifier of the terminal device, the terminal device continues to maintain the first state.

In this embodiment of this application, with the low-power first state introduced, power consumption of the terminal device is reduced. The terminal device in the first state may be woken up in a plurality of manners, to ensure normal running of a service of the terminal device. Compared with an existing WUS technology, time for monitoring a PDCCH is reduced for the terminal device, and power consumption of the terminal device is further reduced. The terminal device may further monitor the wake-up information through a low-power transceiver circuit to further reduce power consumption of the terminal device.

In a possible implementation, in the first state, intra-frequency measurement, inter-frequency measurement, cell measurement, and/or cell reselection are not performed. Behavior of the terminal device in the first state is limited, so that power consumption of the terminal device is further reduced.

In a possible implementation, the first state is similar to a powered-off state for the terminal device. The terminal device in the first state maintains registration with a core network device and an air interface configuration, where the air interface configuration includes but is not limited to a priority configuration. The terminal device in the first state does not perform idle-state behavior such as intra-frequency measurement, inter-frequency measurement, cell measurement, and/or cell reselection. Behavior of the terminal device in the first state is limited, so that power consumption of the terminal device is further reduced.

In another possible implementation, the first state is similar to a powered-off state for the terminal device. The terminal device in the first state maintains registration with the core network device and an air interface configuration, where the air interface configuration includes but is not limited to a priority configuration. The terminal device in the first state performs idle-state behavior such as relaxed intra-frequency measurement, relaxed inter-frequency measurement, relaxed cell measurement, and/or relaxed cell reselection. The relaxed intra-frequency measurement/inter-frequency measurement/cell measurement means that, compared with intra-frequency measurement/inter-frequency measurement/cell measurement in an idle state or an inactive state defined in an existing protocol, the relaxed intra-frequency measurement/inter-frequency measurement/cell measurement has a longer measurement period, for example, a quantity of DRX cycles for measurement is larger. The relaxed cell reselection means that, compared with cell reselection in the idle state or the inactive state defined in the existing protocol, the relaxed cell reselection has a lower threshold for triggering cell reselection or triggering cell measurement. Behavior of the terminal device in the first state is limited, so that power consumption of the terminal device is further reduced.

In a possible implementation, a first request message sent by the terminal device is received, where the first request message is used to request to configure the first state, and the first request message includes one or more pieces of the following information: a request for configuration of duration of the timer of the first state, or a request for configuration of the N paging occasions. The first request message is sent to the core network device. First configuration information is received from the core network device, where the first configuration information is determined by the core network device based on the first request message. The first configuration information is sent to the terminal device. The first configuration information includes one or more pieces of the following information: the duration of the timer of the first state, the group identifier of the terminal device, the identifier of the terminal device, or the N paging occasions. The terminal device may request a network side to configure the first state, and the access network device configures the first state for the terminal device based on the request of the terminal device. This avoids a case that the terminal device cannot enter the first state due to incompatibility between the terminal device and the network side, or that the terminal device cannot leave the first state because the terminal device moves to an area that does not support the first state.

For example, the first request message may be carried in a registration request (registration request), or the first request message may be carried in a tracking area update (tracing area update, TAU) request.

After receiving the first request message, the access network device forwards the first request message to the core network device. The core network device may be an access and mobility management function (access and mobility management function, AMF), or may be a network element or a network function of another core network. This is not limited herein.

Specifically, the first state is configured for the terminal device corresponding to the identifier of the terminal device. For example, when the identifier of the terminal device included in the first configuration information is "UE1", the first state is configured based on the first configuration information for the terminal device (for example, a terminal device 1) corresponding to the identifier "UE1" of the terminal device.

Alternatively, the first state is configured for one or more terminal devices corresponding to the group identifier of the terminal device. For example, when the group identifier of the terminal device included in the first configuration information is "group 1", the first state is configured based on the first configuration information for terminal devices (for example, a terminal device 1, a terminal device 2, and a terminal device 3) corresponding to the group identifier "group1".

Optionally, the duration of the timer of the first state may be the same as duration of a TAU timer (timer).

Optionally, the duration of the timer of the first state may also be related to an actual service, that is, may be equal to a service arrival period.

For example, the first configuration information may be carried in a registration accept message, or the first configuration information may be carried in a tracking area update accept message. This is not limited herein.

In a possible implementation, second information sent by the terminal device is received, where the second information indicates one or more pieces of the following information: information about whether the terminal device supports configuration of the first state; a processing delay after the terminal device receives the wake-up information from the access network device; or a minimum time period from receiving the wake-up information from the access network device to receiving the paging message. The terminal device may report capability information (namely, the second information) of the terminal device to the network side. The access network device configures the first state to the terminal device based on the reported capability information of the terminal device. This avoids the case that the terminal device cannot enter the first state due to incompatibility between the terminal device and the network side.

In a possible implementation, the first information further indicates one or more pieces of the following information: a cell identifier, and information about whether a cell determined by the cell identifier supports sending the wake-up information; or a frequency identifier, and information about whether a cell determined by the frequency identifier supports the terminal device in the first state. This prevents a terminal device that does not support entering the first state from entering the first state, and reduces signaling overheads.

Optionally, the first information may further include a paging probability, and the first information indicates a terminal device with the same paging probability to enter the first state. For example, when the paging probability included in the first information is 0.75, a terminal device whose paging probability is 0.75 in terminal devices that receive the first information enters the first state. For another example, when the paging probability included in the first information is (0.75-1], a terminal device, in the terminal devices that receive the first information, whose paging probability is within the (0.75-1] interval enters the first state.

Optionally, the first information may be carried in an RRC release message, or the first information is an RRC connection release message.

In a possible implementation, the wake-up information includes one or more of the following: the identifier of the terminal device, an identifier of a group to which the terminal device belongs, or the paging probability range. The paging probability range indicates that a probability that the terminal device is paged falls within the range interval. The terminal device is identified in a plurality of manners, thereby improving implementation flexibility of the solution. Signaling overheads can be reduced, and a delay of waking up the terminal device can be reduced.

Specifically, the identifier of the terminal device may be a 5G globally unique temporary identity (5G Globally Unique Temporary UE Identity, 5G-GUTI). The 5G-GUTI includes a globally unique AMF identifier (globally unique AMF identifier, GUAMI) and a 5G temporary mobile subscriber identity (5G Temporary Mobile Subscriber Identity, 5G-TMSI). The GUAMI indicates an AMF that provides a service for the terminal device.

Alternatively, the identifier of the terminal device may be a 5G-S-TMSI, and the 5G-S-TMSI is a shortened form compared with the 5G-GUTI. The 5G-S-TMSI includes an identifier (AMF set ID) of a set to which the AMF belongs, an AMF pointer (AMF pointer), and the 5G-TMSI.

The group identifier of the terminal device may be a service identifier allocated by the core network device based on a service (service). Terminal devices of a same service are grouped into a same group.

Alternatively, the group identifier of the terminal device may be a session identifier allocated by the core network device based on a session (session). Terminal devices that use a same session are grouped into a same group.

Alternatively, the group identifier of the terminal device may be a group identifier allocated by the core network device based on the paging probability of the terminal device. Terminal devices in a same paging probability range are grouped into a same group. The paging probability range indicates that a probability that the terminal device is paged falls within the range interval.

According to a fifth aspect, an embodiment of this application proposes a communication method applied to a core network device, including: receiving a first request message from an access network device, where the first request message requests to configure duration of a timer of a first state, or requests to configure N paging occasions, and N is a positive integer, where a terminal device in the first state skips receiving one or more pieces of the following information from the access network device: a paging message, a synchronization signal, or a system message, or the terminal device in the first state leaves the first state when the timer of the first state expires, and receives the one or more pieces of information; and determining first configuration information based on the first request message, where the first configuration information includes one or more pieces of the following information: the duration of the timer of the first state, a group identifier of the terminal device, an identifier of the terminal device, or the N paging occasions; and sending the first configuration information to the access network device. The access network device requests, based on a request of the terminal device, the core network device to configure the first state for the terminal device. This avoids a case that the terminal device cannot enter the first state due to incompatibility between the terminal device and a network side, or that the terminal device cannot leave the first state.

In a possible implementation, in the first state, intra-frequency measurement, inter-frequency measurement, cell measurement, and/or cell reselection are not performed. Behavior of the terminal device in the first state is limited, so that power consumption of the terminal device is further reduced.

In a possible implementation, the first state is similar to a powered-off state for the terminal device. The terminal device in the first state maintains registration with the core network device and an air interface configuration, where the air interface configuration includes but is not limited to a priority configuration. The terminal device in the first state does not perform idle-state behavior such as intra-frequency measurement, inter-frequency measurement, cell measurement, and/or cell reselection. Behavior of the terminal device in the first state is limited, so that power consumption of the terminal device is further reduced.

In another possible implementation, the first state is similar to a powered-off state for the terminal device. The terminal device in the first state maintains registration with the core network device and an air interface configuration, where the air interface configuration includes but is not limited to a priority configuration. The terminal device in the first state performs idle-state behavior such as relaxed intra-frequency measurement, relaxed inter-frequency measurement, relaxed cell measurement, and/or relaxed cell reselection. The relaxed intra-frequency measurement/inter-frequency measurement/cell measurement means that, compared with intra-frequency measurement/inter-frequency measurement/cell measurement in an idle state or an inactive state defined in an existing protocol, the relaxed intra-frequency measurement/inter-frequency measurement/cell measurement has a longer measurement period, for example, a quantity of DRX cycles for measurement is larger. The relaxed cell reselection means that, compared with cell reselection in the idle state or the inactive state defined in the existing protocol, the relaxed cell reselection has a lower threshold for triggering cell reselection or triggering cell measurement. Behavior of the terminal device in the first state is limited, so that power consumption of the terminal device is further reduced.

In a possible implementation, the core network device sends the paging message to the access network device, where the paging message indicates the access network device to indicate, by using wake-up information, the terminal device to leave the first state. Specifically, when the core network device has downlink data, a destination of the downlink data is the terminal device in the first state. The core network device sends the paging message to the access network device. The core network device may indicate, in a plurality of manners, the terminal device to leave the first state, thereby improving implementation flexibility of the solution.

Optionally, the paging message includes first indication information. The first indication information indicates the access network device to indicate, by using wake-up information, the terminal device to leave the first state. In other words, the paging message includes one piece of explicit indication information, and the explicit indication information is referred to as the first indication information. After receiving the paging message, the access network device sends wake-up information to the terminal device based on the first indication information, where the wake-up information indicates the terminal device to leave the first state.

Optionally, the paging message sent by the core network device to the access network device includes configuration information of the wake-up information. The configuration information of the wake-up information includes one or more of the following: the identifier of the terminal device, the group identifier, information about whether to wake up the terminal device based on a group of the terminal device, a sending rate of the wake-up information, a DRX cycle, or an extended discontinuous reception eDRX cycle. The configuration information of the wake-up information is used to configure a manner in which the access network device uses the wake-up information to indicate the terminal device to leave the first state.

In another possible implementation, when the core network device has downlink data, the core network device sends the first indication information to the access network device. In this case, the core network device indicates, through the first indication information, the access network device to indicate, by using wake-up information, the terminal device to leave the first state. In other words, the core network device indicates, without using the paging message, the access network device to indicate, by using wake-up information, the terminal device to leave the first state. The paging message and the first indication information are independent of each other.

In another possible implementation, the access network device indicates the terminal device to enter the first state. The first state may be a subset of the inactive state. The core network device does not know that the terminal device enters the first state. When the core network device sends downlink data to the terminal device, the access network device receives the downlink data. After receiving the downlink data, the access network device determines whether the terminal device is in the first state. If the access network device determines that the terminal device is in the first state, the access network device sends the wake-up information to the terminal device, to indicate the terminal device to leave the first state.

According to a sixth aspect, an embodiment of this application proposes a terminal device, including:
a transceiver module, configured to receive first information from an access network device; and
a processing module, configured to enter a first state based on the first information.

The transceiver module is further configured to: receive, in the first state, wake-up information from the access network device, and skip receiving, in the first state, one or more pieces of the following information from the access network device: a paging message, a synchronization signal, or a system message.

The processing module is further configured to: leave the first state based on the wake-up information, and receive the one or more pieces of information from the access network device; or leave the first state based on the wake-up information, and initiate a random access request.

In a possible implementation, in the first state, intra-frequency measurement, inter-frequency measurement, cell measurement, and/or cell reselection are not performed.

In a possible implementation, the transceiver module is further configured to send a first request message to the access network device. The first request message is used to request to configure the first state. The first request message includes one or more pieces of the following information: a request for configuration of duration of a timer of the first state, or a request for configuration of the N paging occasions. A destination of the first request message is a core network device.

The transceiver module is further configured to receive first configuration information from the access network device. The first configuration information includes one or more pieces of the following information: the duration of the timer of the first state, a group identifier of the terminal device, an identifier of the terminal device, or the N paging occasions. The first configuration information is determined by the core network device based on the first request message.

In a possible implementation, the transceiver module is further configured to send second information to the access network device. The second information indicates one or more pieces of the following information:
information about whether configuration of the first state is supported;
a processing delay after the wake-up information from the access network device is received; or
a minimum time period from receiving the wake-up information from the access network device to receiving the paging message.

In a possible implementation, the first information further indicates one or more pieces of the following information: a cell identifier, and information about whether a cell determined by the cell identifier supports sending the wake-up information; or a frequency identifier, and information about whether a cell determined by the frequency identifier supports the terminal device in the first state.

In a possible implementation, the wake-up information includes one or more of the following: the identifier of the terminal device, an identifier of a group to which the terminal device belongs, or a paging probability range. The paging probability range indicates that a probability that the terminal device is paged falls within the range interval.

In a possible implementation, the processing module is further configured to: when entering an idle state from a connected state or entering an inactive state from a connected state, if the timer of the first state does not expire, enter the first state.

According to a seventh aspect, an embodiment of this application proposes a terminal device, including:
a transceiver module, configured to receive first information from an access network device; and
a processing module, configured to enter a first state based on the first information.

The processing module is further configured to: in the first state, when a timer of the first state expires, leave the first state, and receive one or more pieces of information; or
in the first state, leave the first state when receiving no wake-up information in N consecutive paging occasions, and receive the one or more pieces of information, where N is a positive integer, N indicates a maximum quantity of consecutive paging occasions for the terminal device, and the wake-up information indicates to leave the first state.

In a possible implementation, in the first state, intra-frequency measurement, inter-frequency measurement, cell measurement, and/or cell reselection are not performed.

In a possible implementation, the transceiver module is further configured to send a first request message to the access network device. The first request message is used to request to configure the first state. The first request message includes one or more pieces of the following information: a request for configuration of duration of a timer of the first state, or a request for configuration of the N paging occasions. A destination of the first request message is a core network device.

The transceiver module is further configured to receive first configuration information from the access network device. The first configuration information includes one or more pieces of the following information: the duration of the timer of the first state, a group identifier of the terminal device, an identifier of the terminal device, or the N paging occasions. The first configuration information is determined by the core network device based on the first request message.

In a possible implementation, the transceiver module is further configured to send second information to the access network device. The second information indicates one or more pieces of the following information: information about whether configuration of the first state is supported; a processing delay after the wake-up information from the access network device is received; or a minimum time period from receiving the wake-up information from the access network device to receiving the paging message.

In a possible implementation, the first information further indicates one or more pieces of the following information: a cell identifier, and information about whether a cell determined by the cell identifier supports sending the wake-up information; or a frequency identifier, and information about whether a cell determined by the frequency identifier supports the terminal device in the first state.

In a possible implementation, the wake-up information includes one or more of the following: the identifier of the terminal device, an identifier of a group to which the terminal device belongs, or a paging probability range. The paging probability range indicates that a probability that the terminal device is paged falls within the range interval.

In a possible implementation, the processing module is further configured to: when entering an idle state from a connected state or entering an inactive state from a connected state, if the timer of the first state does not expire, enter the first state.

According to an eighth aspect, an embodiment of this application proposes an access network device, including:
a transceiver module, configured to: send first information to a terminal device, where the first information indicates the terminal device to enter a first state, where
the terminal device in the first state receives wake-up information, and the terminal device in the first state skips receiving one or more pieces of the following information from the access network device: a paging message, a synchronization signal, or a system message.

The transceiver module is further configured to send the wake-up information to the terminal device, where the wake-up information indicates the terminal device to leave the first state. The terminal device that leaves the first state receives the one or more pieces of information from the access network device, or the terminal device initiates a random access request.

In a possible implementation, the terminal device in the first state skips performing intra-frequency measurement, inter-frequency measurement, cell measurement, and/or cell reselection.

In a possible implementation, the transceiver module is further configured to receive a first request message sent by the terminal device. The first request message is used to request to configure the first state. The first request message includes one or more pieces of the following information: a request for configuration of duration of a timer of the first state, or a request for configuration of N paging occasions.

The transceiver module is further configured to send the first request message to a core network device.

The transceiver module is further configured to receive first configuration information from the core network device, where the first configuration information is determined by the core network device based on the first request message.

The transceiver module is further configured to send the first configuration information to the terminal device. The first configuration information includes one or more pieces of the following information: the duration of the timer of the first state, a group identifier of the terminal device, an identifier of the terminal device, or the N paging occasions.

In a possible implementation, the transceiver module is further configured to receive second information sent by the terminal device. The second information indicates one or more pieces of the following information: information about whether the terminal device supports configuration of the first state; a processing delay after the terminal device receives the wake-up information from the access network device; or a minimum time period from receiving the wake-up information from the access network device to receiving the paging message.

In a possible implementation, the first information further indicates one or more pieces of the following information: a cell identifier, and information about whether a cell determined by the cell identifier supports sending the wake-up information; or a frequency identifier, and information about whether a cell determined by the frequency identifier supports the terminal device in the first state.

In a possible implementation, the wake-up information includes one or more of the following: the identifier of the terminal device, the group identifier of the terminal device, or a paging probability range. The paging probability range indicates that a probability that the terminal device is paged falls within the range interval.

According to a ninth aspect, an embodiment of this application proposes an access network device, including:
a transceiver module, configured to: send first information to a terminal device, where the first information indicates the terminal device to enter a first state.

The terminal device in the first state receives wake-up information. The terminal device in the first state skips receiving one or more pieces of the following information from the access network device: a paging message, a synchronization signal, or a system message.

The terminal device in the first state leaves the first state when a timer of the first state expires, and receives the one or more pieces of information; or
the terminal device in the first state leaves the first state when receiving no wake-up information from the access network device in N consecutive paging occasions, and receives the one or more pieces of information, where N is a positive integer, N indicates a maximum quantity of consecutive paging occasions for the terminal device, and the wake-up information indicates to leave the first state.

In a possible implementation, the terminal device in the first state skips performing intra-frequency measurement, inter-frequency measurement, cell measurement, and/or cell reselection.

In a possible implementation, the transceiver module is further configured to receive a first request message sent by the terminal device. The first request message is used to request to configure the first state. The first request message includes one or more pieces of the following information: a request for configuration of duration of the timer of the first state, or a request for configuration of the N paging occasions.

The transceiver module is further configured to send the first request message to a core network device.

The transceiver module is further configured to receive first configuration information from the core network device, where the first configuration information is determined by the core network device based on the first request message.

The transceiver module is further configured to send the first configuration information to the terminal device. The first configuration information includes one or more pieces of the following information: the duration of the timer of the first state, a group identifier of the terminal device, an identifier of the terminal device, or the N paging occasions.

In a possible implementation, the transceiver module is further configured to receive second information sent by the terminal device. The second information indicates one or more pieces of the following information: information about whether the terminal device supports configuration of the first state; a processing delay after the terminal device receives the wake-up information from the access network device; or a minimum time period from receiving the wake-up information from the access network device to receiving the paging message.

In a possible implementation, the first information further indicates one or more pieces of the following information: a cell identifier, and information about whether a cell determined by the cell identifier supports sending the wake-up information; or a frequency identifier, and information about whether a cell determined by the frequency identifier supports the terminal device in the first state.

In a possible implementation, the wake-up information includes one or more of the following: the identifier of the terminal device, the group identifier of the terminal device, or a paging probability range. The paging probability range indicates that a probability that the terminal device is paged falls within the range interval.

According to a tenth aspect, an embodiment of this application provides a core network device, including:
a transceiver module, configured to receive a first request message from an access network device, where the first request message requests to configure duration of a timer of a first state, or requests to configure N paging occasions, and N is a positive integer, where
a terminal device in the first state skips receiving one or more pieces of the following information from the access network device: a paging message, a synchronization signal, or a system message, or the terminal device in the first state leaves the first state when the timer of the first state expires, and receives the one or more pieces of information; and
a processing module, configured to determine first configuration information based on the first request message, where the first configuration information includes one or more pieces of the following information: the duration of the timer of the first state, a group identifier of the terminal device, an identifier of the terminal device, or the N paging occasions.

The transceiver module is further configured to send the first configuration information to the access network device.

In a possible implementation, the terminal device in the first state skips performing intra-frequency measurement, inter-frequency measurement, cell measurement, and/or cell reselection.

In a possible implementation, the paging message is sent to the access network device, where the paging message indicates the access network device to indicate, by using wake-up information, the terminal device to leave the first state.

An eleventh aspect of this application provides a communication apparatus. The communication apparatus includes a processor, configured to enable the communication apparatus to implement the method described in any one of the first aspect or the possible implementations of the first aspect. The device may further include a memory. The memory is coupled to the processor. When the processor executes instructions stored in the memory, the communication apparatus may be enabled to implement the method according to any one of the possible implementations of the first aspect. The device may further include a communication interface. The communication interface is used by the apparatus to communicate with another device. For example, the communication interface may be a transceiver, a circuit, a bus, a module, or another type of communication interface.

In this application, the instructions in the memory may be stored in advance, or may be stored after being downloaded from the Internet when the communication apparatus is used. A source of the instructions in the memory is not specifically limited in this application. The coupling in this application is indirect coupling or connection between apparatuses, units, or modules for information exchange between the apparatuses, the units, or the modules, and may be in electrical, mechanical, or other forms.

A twelfth aspect of this application provides a communication apparatus. The communication apparatus includes a processor, configured to enable the communication apparatus to implement the method described in any one of the second aspect or the possible implementations of the second aspect. The device may further include a memory. The memory is coupled to the processor. When the processor executes instructions stored in the memory, the communication apparatus may be enabled to implement the method according to any one of the possible implementations of the second aspect. The device may further include a communication interface. The communication interface is used by the apparatus to communicate with another device. For example, the communication interface may be a transceiver, a circuit, a bus, a module, or another type of communication interface.

In this application, the instructions in the memory may be stored in advance, or may be stored after being downloaded from the Internet when the communication apparatus is used. A source of the instructions in the memory is not specifically limited in this application. The coupling in this application is indirect coupling or connection between apparatuses, units, or modules for information exchange between the apparatuses, the units, or the modules, and may be in electrical, mechanical, or other forms.

A thirteenth aspect of this application provides a communication apparatus. The communication apparatus includes a processor, configured to enable the communication apparatus to implement the method described in any one of the third aspect or the possible implementations of the third aspect. The device may further include a memory. The memory is coupled to the processor. When the processor executes instructions stored in the memory, the communication apparatus may be enabled to implement the method according to any one of the possible implementations of the third aspect. The device may further include a communication interface. The communication interface is used by the apparatus to communicate with another device. For example, the communication interface may be a transceiver, a circuit, a bus, a module, or another type of communication interface.

In this application, the instructions in the memory may be stored in advance, or may be stored after being downloaded from the Internet when the communication apparatus is used. A source of the instructions in the memory is not specifically limited in this application. The coupling in this application is indirect coupling or connection between apparatuses, units, or modules for information exchange between the apparatuses, the units, or the modules, and may be in electrical, mechanical, or other forms.

A fourteenth aspect of this application provides a communication apparatus. The communication apparatus includes a processor, configured to enable the communication apparatus to implement the method described in any one of the fourth aspect or the possible implementations of the fourth aspect. The device may further include a memory. The memory is coupled to the processor. When the processor executes instructions stored in the memory, the communication apparatus may be enabled to implement the method according to any one of the possible implementations of the fourth aspect. The device may further include a communication interface. The communication interface is used by the apparatus to communicate with another device. For example, the communication interface may be a transceiver, a circuit, a bus, a module, or another type of communication interface.

In this application, the instructions in the memory may be stored in advance, or may be stored after being downloaded from the Internet when the communication apparatus is used. A source of the instructions in the memory is not specifically limited in this application. The coupling in this application is indirect coupling or connection between apparatuses, units, or modules for information exchange between the apparatuses, the units, or the modules, and may be in electrical, mechanical, or other forms.

A fifteenth aspect of this application provides a communication apparatus. The communication apparatus includes a processor, configured to enable the communication apparatus to implement the method described in any one of the fifth aspect or the possible implementations of the fifth aspect. The device may further include a memory. The memory is coupled to the processor. When the processor executes instructions stored in the memory, the communication apparatus may be enabled to implement the method according to any one of the possible implementations of the fifth aspect. The device may further include a communication interface. The communication interface is used by the apparatus to communicate with another device. For example, the communication interface may be a transceiver, a circuit, a bus, a module, or another type of communication interface.

In this application, the instructions in the memory may be stored in advance, or may be stored after being downloaded from the Internet when the communication apparatus is used. A source of the instructions in the memory is not specifically limited in this application. The coupling in this application is indirect coupling or connection between apparatuses, units, or modules for information exchange between the apparatuses, the units, or the modules, and may be in electrical, mechanical, or other forms.

A sixteenth aspect of this application provides a computer storage medium, where the computer storage medium may be nonvolatile. The computer storage medium stores computer-readable instructions. When the computer-readable instructions are executed by a processor, the method described in any one of the first aspect or the possible implementations of the first aspect, and/or the method described in any one of the second aspect or the possible implementations of the second aspect, and/or the method described in any one of the third aspect or the possible implementations of the third aspect, and/or the method described in any one of the fourth aspect or the possible implementations of the fourth aspect, and/or the method described in any one of the fifth aspect or the possible implementations of the fifth aspect are/is implemented.

A seventeenth aspect of this application provides a computer program product including instructions. When the computer program product runs on a computer, the computer is enabled to perform the method described in any one of the first aspect or the possible implementations of the first aspect, and/or the method described in any one of the second aspect or the possible implementations of the second aspect, and/or the method described in any one of the third aspect or the possible implementations of the third aspect, and/or the method described in any one of the fourth aspect or the possible implementations of the fourth aspect, and/or the method described in any one of the fifth aspect or the possible implementations of the fifth aspect.

An eighteenth aspect of this application provides a communication system. The communication system includes a plurality of terminal devices according to the sixth aspect, the terminal device according to the seventh aspect, the access network device according to the eighth aspect, the access network device according to the ninth aspect, and/or the core network device according to the tenth aspect.

The solutions provided in the sixth aspect to the eighteenth aspect are used or combined in use to implement the method provided in the first aspect, the second aspect, the third aspect, the fourth aspect, or the fifth aspect. Therefore, the solutions may achieve same or corresponding beneficial effects as the first aspect, the second aspect, the third aspect, the fourth aspect, or the fifth aspect. Details are not described herein again.

### BRIEF DESCRIPTION OF DRAWINGS

FIG. 1 is a schematic diagram of an architecture of a communication system 1000 to which embodiments of this application are applied;
FIG. 2(a) to FIG. 2(d) are schematic diagrams of communication scenarios to which embodiments of this application are applied;
FIG. 3 is a simplified schematic diagram of a communication system according to an embodiment of this application;
FIG. 4 is a schematic diagram of a hardware structure of a communication apparatus according to an embodiment of this application;
FIG. 5 is a schematic flowchart of a wake up signal according to an embodiment of this application;
FIG. 6 is a schematic flowchart of a communication method according to an embodiment of this application;
FIG. 7 is another schematic flowchart of a communication method according to an embodiment of this application;
FIG. 8 is a schematic diagram of a first state according to an embodiment of this application;
FIG. 9 is another schematic diagram of a first state according to an embodiment of this application;
FIG. 10 is a schematic diagram of groups of paging probabilities according to an embodiment of this application; and
FIG. 11 is a schematic diagram of a communication apparatus according to an embodiment of this application.

### DESCRIPTION OF EMBODIMENTS

The following describes technical solutions in embodiments of this application with reference to accompanying drawings in embodiments of this application.

To clearly describe the technical solutions in embodiments of this application, terms such as "first" and "second" are used in embodiments of this application to distinguish between same items or similar items that provide basically same functions or purposes. For example, first information and second information are merely used to distinguish between different information, and do not limit a sequence of the first information and the second information. A person skilled in the art may understand that the words such as "first" and "second" do not limit a quantity or an execution sequence, and the words such as "first" and "second" do not indicate a definite difference.

In embodiments of this application, "at least one" means one or more, and "a plurality of means two or more. The term "and/or" describes an association relationship between associated objects, and indicates that three relationships may exist. For example, A and/or B may indicate the following cases: only A exists, both A and B exist, and only B exists, where A and B may be singular or plural. The character "/" generally indicates an "or" relationship between associated objects before and after the character. "At least one of the following items (pieces)" or a similar expression thereof refers to any combination of these items, including any combination of singular items (pieces) or plural items (pieces). For example, at least one of a, b, or c may represent a, b, c, a and b, a and c, b and c, or a, b, and c, where a, b, and c each may be singular or plural.

For ease of understanding the communication method provided in embodiments of this application, the following describes a system architecture and an application scenario of the communication method provided in embodiments of this application. It may be understood that the system architecture and the application scenario described in embodiments of this application are intended to describe the technical solutions in embodiments of this application more clearly, and do not constitute a limitation on the technical solutions provided in embodiments of this application.

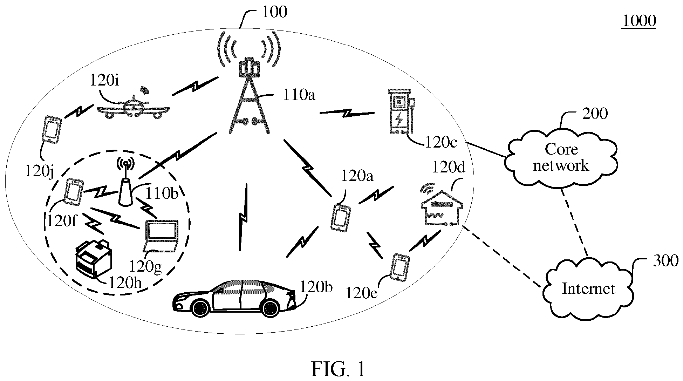

FIG. 1 is a schematic diagram of an architecture of a communication system 1000 to which embodiments of this application are applied. As shown in FIG. 1, the communication system includes a radio access network 100 and a core network 200. Optionally, the communication system 1000 may further include an Internet 300. The radio access network 100 may include at least one access network device (for example, 110a and 110b in FIG. 1), and may further include at least one terminal (for example, 120a to 120j in FIG. 1). The terminal device is connected to the access network device in a wireless manner. The access network device is connected to the core network device in a wireless or wired manner. The core network device and the access network device may be different physical devices that are independent of each other, or functions of the core network device and logical functions of the access network device may be integrated into a same physical device, or some functions of the core network device and some functions of the access network device may be integrated into one physical device. The terminals, and the access network devices may be connected to each other in a wired or wireless manner. FIG. 1 is merely a schematic diagram. The communication system may further include another network device, for example, may further include a wireless relay device and a wireless backhaul device, which are not shown in FIG. 1.

The access network device may be a device having a wireless transceiver function. The access network device may be a device that provides a wireless communication function service and is usually located on a network side, and includes but is not limited to: a next generation base station (gNodeB, gNB) in a 5th generation (5th generation, 5G) communication system, a next generation base station in a 6th generation (6th generation, 6G) mobile communication system, a base station in a future mobile communication system, an access node in a Wi-Fi system, or the like; an evolved NodeB (evolved NodeB, eNB) in an LTE system, a radio network controller (radio network controller, RNC), a NodeB (NodeB, NB), a base station controller (base station controller, BSC), a home base station (for example, a home evolved NodeB, or a home NodeB, HNB), a baseband unit (baseband unit, BBU), a transmission and reception point (transmission and reception point, TRP), a transmitting point (transmitting point, TP), a base transceiver station (base transceiver station, BTS); or the like. In a network structure, the access network device may include a central unit (central unit, CU) node, a distributed unit (distributed unit, DU) node, a RAN device including a CU node and a DU node, or a RAN device including a control-plane CU node, a user-plane CU node, and a DU node. The access network device may serve a cell. User equipment communicates with a base station through a transmission resource (for example, a frequency domain resource, or in other words, a frequency spectrum resource) used for the cell. The cell may be a cell corresponding to the base station (for example, a base station). The cell may belong to a macro base station, or a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to providing a high-speed data transmission service. The access network device may be a macro base station (for example, 110a in FIG. 1), or may be a micro base station or an indoor station (for example, 110b in FIG. 1), or may be a relay node or a donor node, a device that provides a wireless communication service for user equipment in a V2X communication system, a radio controller in a cloud radio access network (cloud radio access network, CRAN) scenario, a relay station, a vehicle-mounted device, a wearable device, a network device in a future evolved network, or the like. A specific technology and a specific device form used for the access network device are not limited in embodiments of this application. For ease of description, the following uses an example in which a base station is used as the access network device for description.

The terminal may also be referred to as a terminal device, user equipment (user equipment, UE), a mobile station (mobile station, MS), a mobile terminal (mobile terminal, MT), or the like, and may be an entity on a user side configured to receive or transmit a signal, for example, a mobile phone. The terminal device may be user equipment (user equipment, UE). The UE includes a handheld device, a vehicle-mounted device, a wearable device, or a computing device having a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in remote medical, a wireless terminal in a smart grid, a wireless terminal in a smart city (smart city), a wireless terminal in a smart home (smart home), or the like. The terminal may be widely applied to various scenarios such as device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, self-driving, remote medical, a smart grid, a smart furniture, a smart office, a smart wearable device, intelligent transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. In embodiments of this application, an apparatus configured to implement a function of the terminal may be a terminal, or may be an apparatus that can support the terminal in implementing the function, for example, a chip system, a communication module, or a modem. The apparatus may be installed in the terminal. In embodiments of this application, the chip system may include a chip, or may include a chip and another discrete device. In the technical solutions provided in embodiments of this application, the technical solutions provided in embodiments of this application are described by using an example in which the apparatus for implementing the terminal function is a terminal and the terminal is UE. A specific technology and a specific device form used for the terminal device are not limited in embodiments of this application.

Optionally, the UE may also be configured to serve as a base station. For example, the UE may serve as a scheduling entity that provides a sidelink signal between UEs in vehicle-to-everything (vehicle-to-everything, V2X), device-to-device (device-to-device, D2D), point-to-point (peer-to-peer, P2P), or the like.

The base station and the terminal may be fixed, or may be mobile. The base station and the terminal each may be deployed on land, including an indoor or outdoor device, a handheld device, or a vehicle-mounted device, may be deployed on a water surface, or may be deployed on an airplane, in a balloon, or on a satellite in the air. Embodiments of this application impose no limitation on application scenarios of the base station and the terminal.

Roles of the base station and the terminal may be relative. For example, a helicopter or an uncrewed aerial vehicle 120i in FIG. 1 may be configured as a mobile base station. For the terminal 120j that accesses the radio access network 100 through 120i, the terminal 120i is a base station. For the base station 110a, the terminal 120i is a terminal, that is, 110a and 120i communicate with each other through a wireless air interface protocol. Certainly, 110a and 120i may alternatively communicate with each other through an interface protocol between base stations. In this case, 120i is also a base station for 110a. Therefore, both the base station and the terminal may be collectively referred to as communication apparatuses. 110a, 110b, and 120a to 120j in FIG. 1 may be referred to as communication apparatuses that have respective corresponding functions, such as a communication apparatus having a base station function or a communication apparatus having a terminal function.

Base stations, terminals, or a base station and a terminal may communicate with each other by using a licensed spectrum, may communicate with each other by using an unlicensed spectrum, or may communicate with each other by using both a licensed spectrum and an unlicensed spectrum; and may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used by wireless communication is not limited in embodiments of this application.

In embodiments of this application, the function of the base station may alternatively be performed by a module (for example, a chip) in the base station, or may be performed by a control subsystem including the base station function. The control subsystem including the base station function may be a control center in the foregoing application scenarios of the terminal such as the smart grid, industrial control, intelligent transportation, and the smart city. The function of the terminal may alternatively be performed by a module (for example, a chip or a modem) in the terminal, or may be performed by an apparatus including the terminal function.

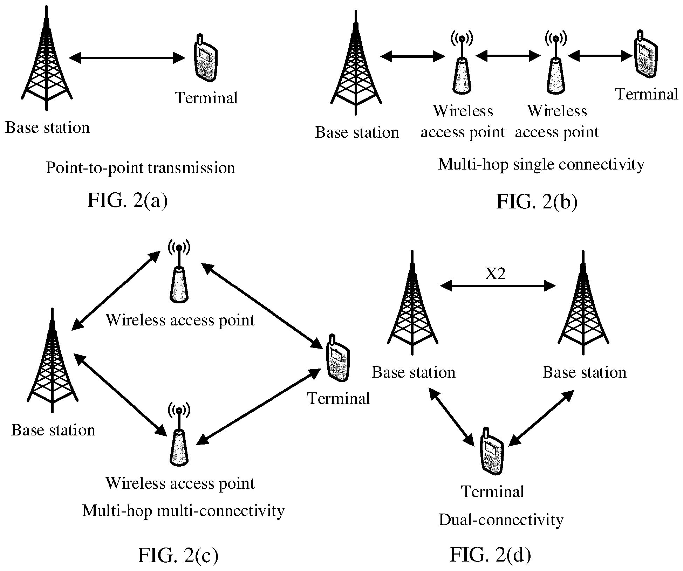

Further, this application may be applied to a plurality of specific communication scenarios such as point-to-point transmission between a base station and a terminal or between terminals (for example, point-to-point transmission between a base station and a terminal shown in FIG. 2(a)), multi-hop (as shown in FIG. 2(b) and FIG. 2(c)) transmission between a base station and a terminal, dual connectivity (Dual Connectivity, DC) (as shown in FIG. 2(d)) between a plurality of base stations and a terminal, or multi-connectivity. It should be noted that the foregoing specific communication application scenarios are merely examples, and do not constitute a limitation. Particularly, from a perspective of a service, embodiments of this application are applicable to various service scenarios, such as a data coding scenario in an extended reality (extended reality, XR) service and an uplink large-capacity scenario. In addition, FIG. 2(a) to FIG. 2(d) impose no limitation on a network architecture applicable to this application, and a transmission over an uplink, a downlink, an access link, a backhaul (backhaul) link, or a sidelink (Sidelink) is not limited in this application.

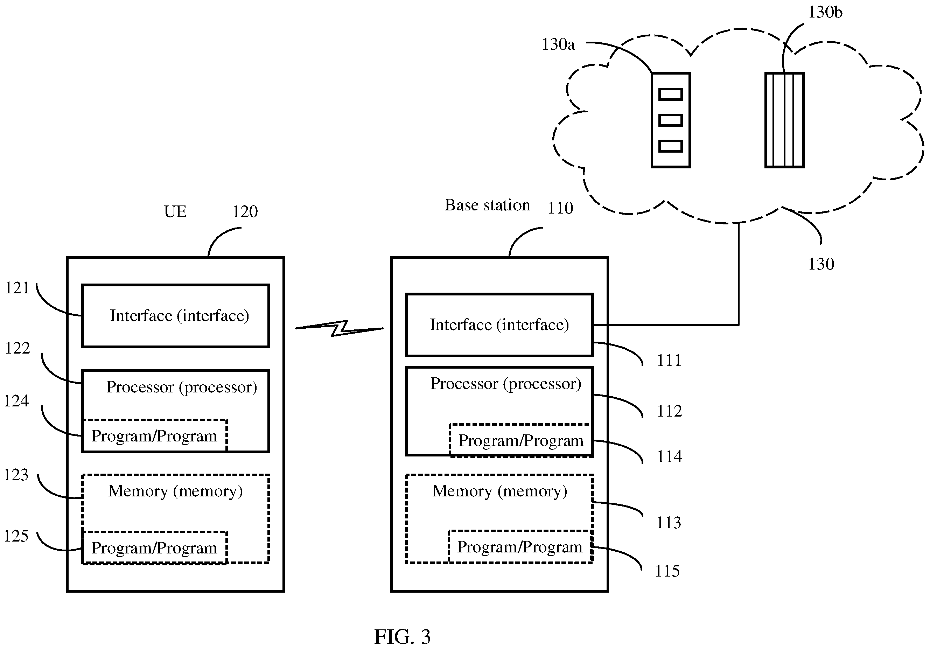

FIG. 3 is a simplified schematic diagram of a communication system according to an embodiment of this application. For simplicity, only a base station 110, UE 120, and a network 130 are shown in FIG. 3. The base station 110 includes an interface 111 and a processor 112. The processor 112 may optionally store a program 114. The base station 110 may optionally include a memory 113. The memory 113 may optionally store a program 115. The UE 120 includes an interface 121 and a processor 122. The processor 122 may optionally store a program 124. The UE 120 may optionally include a memory 123. The memory 123 may optionally store a program 125. These components work together to provide various functions described in this application. For example, the processor 112 and the interface 121 work together to provide a wireless connection between the base station 110 and the UE 120. The processor 122 and the interface 121 work together to implement downlink transmission and/or uplink transmission of the UE 120.

The network 130 may include one or more network nodes 130a and/or 130b to provide a core network function. The network nodes 130a and 130b may be 5G core network nodes, or an earlier generation (for example, 4G, 3G, or 2G) of core network nodes. For example, the networks 130a and 130b may be access management functions (AMF), mobility management entities (MME), or the like. The network 130 may further include one or more network nodes in a public switched telephone network (PSTN), a packet data network, an optical network, an Internet Protocol (IP) network, a wide area network (WAN), a local area network (LAN), a wireless local area network (WLAN), a wired network, a wireless network, a metropolitan area network, and another network, to enable communication between the UE 120 and/or the base station 110.

The processor (for example, the processor 112 and/or the processor 122) may include one or more processors and be implemented as a combination of computing devices. The processor (for example, the processor 112 and/or the processor 122) may include one or more of the following: a microprocessor, a microcontroller, a digital signal processor (DSP), a digital signal processing device (DSPD), an application-specific integrated circuit (ASIC), a field programmable gate array (FPGA), a programmable logic device (PLD), gating logic, transistor logic, a discrete hardware circuit, a processing circuit, or other proper hardware, firmware, and/or a combination of hardware and software, to perform various functions described in this application. The processor (for example, the processor 112 and/or the processor 122) may be a general-purpose processor or a dedicated processor. For example, the processor 112 and/or the processor 122 may be a baseband processor or a central processing unit. The baseband processor may be configured to process a communication protocol and communication data. The central processing unit may be configured to enable the base station 110 and/or the UE 120 to execute a software program and process data in the software program.

The interface (for example, the interface 111 and/or the interface 121) may be configured to implement communication with one or more computer devices (for example, UE, BS, and/or a network node). In some embodiments, the interface may include a wire for coupling a wired connection, or a pin for coupling a wireless transceiver, or a chip and/or a pin for wireless connection. In some embodiments, the interface may include a transmitter, a receiver, a transceiver, and/or an antenna. The interface can be configured to use any available protocol (for example, a 3GPP standard).

The program in this application is used to represent software in a broad sense. Non-limiting examples of software are program code, a program, a subprogram, an instruction, an instruction set, code, a code segment, a software module, an application program, a software application program, and the like. The program may be run in a processor and/or a computer, so that the base station 110 and/or the UE 120 perform various functions and/or processes described in this application.

The memory (for example, the memory 113 and/or the memory 123) may store data used by the processor 112 and/or the processor 122 when executing the software. The memory 113 and the memory 123 may be implemented by using any storage technology. For example, the memory may be any available storage medium that can be accessed by a processor and/or a computer. Non-limiting examples of the storage medium include: a RAM, a ROM, an EEPROM, a CD-ROM, a removable medium, optical disc storage, a magnetic disk storage medium, a magnetic storage device, a flash memory, a register, state storage, remotely mounted storage, local or remote storage components, or any other medium that can carry or store software, data, or information and that can be accessed by a processor/computer.

The memory (for example, the memory 113 and/or the memory 123) and the processor (for example, the processor 112 and/or the processor 122) may be separately disposed or may be integrated. The memory may be configured to be connected to the processor, so that the processor can read information from the memory, and store and/or write information into the memory. The memory 113 may be integrated into the processor 112. The memory 123 may be integrated into the processor 122. The processor (for example, the processor 113 and/or the processor 123) and the memory (for example, the processor 112 and/or the processor 122) may be disposed in an integrated circuit (for example, the integrated circuit may be disposed in the UE, the base station, or another network node).

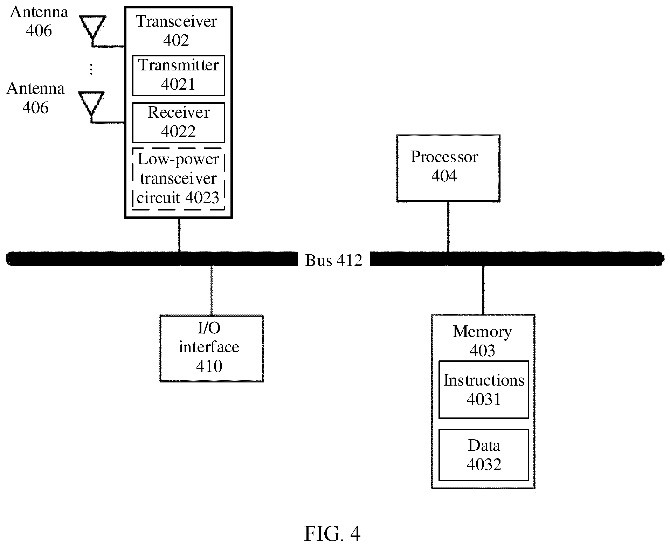

FIG. 4 is a schematic diagram of a hardware structure of a communication apparatus according to an embodiment of this application. The communication apparatus may be a possible implementation of a terminal device, an access network device, and/or a core network device in embodiments of this application. As shown in FIG. 4, the communication apparatus includes at least a processor 404, a memory 403, and a transceiver 402. The memory 403 is further configured to store instructions 4031 and data 4032. Optionally, the communication apparatus may further include antennas 406, an I/O (input/output, Input/Output) interface 410, and a bus 412. The transceiver 402 further includes a transmitter 4041 and a receiver 4022. In addition, the processor 404, the transceiver 402, the memory 403, and the I/O interface 410 are communicatively connected to each other through the bus 412, and the antennas 406 are connected to the transceiver 402.

The processor 404 may be a general-purpose processor, for example, but is not limited to a central processing unit (Central Processing Unit, CPU), or may be a dedicated processor, for example, but is not limited to a digital signal processor (Digital Signal Processor, DSP), an application-specific integrated circuit (Application-Specific Integrated Circuit, ASIC), and a field programmable gate array (Field Programmable Gate Array, FPGA). Alternatively, the processor 404 may be a neural-network processing unit (neural processing unit, NPU). In addition, the processor 404 may alternatively be a combination of a plurality of processors. Particularly, in the technical solutions provided in embodiments of this application, the processor 404 may be configured to perform related steps in subsequent method embodiments. The processor 404 may be a processor that is specially designed to perform the foregoing steps and/or operations, or may be a processor that performs the foregoing steps and/or operations by reading and executing the instructions 4031 stored in the memory 403. The processor 404 may need to use the data 4032 in a process of performing the foregoing steps and/or operations.

The transceiver 402 includes the transmitter 4041 and the receiver 4022. In an optional implementation, the transmitter 4041 is configured to send a signal by using the antenna 406. The receiver 4022 is configured to receive a signal by using at least one of the antennas 406. Particularly, in the technical solution provided in this embodiment of this application, the transmitter 4041 may be specifically configured to perform operations by using at least one of the antennas 406, for example, operations performed by a transceiver module in the terminal device, the access network device, and/or the core network device when a subsequent method embodiment is applied to the terminal device, the access network device, and/or the core network device.

In this embodiment of this application, the transceiver 402 is configured to support the communication apparatus in performing the foregoing receiving function and sending function. A processor having a processing function is considered as the processor 404. The receiver 4022 may also be referred to as an input port, a receiving circuit, or the like. The transmitter 4041 may be referred to as a transmitter, a transmitting circuit, or the like.

In another possible implementation, when the communication apparatus is a terminal device, the transceiver 402 may further include a low-power transceiver circuit 4023. The low-power transceiver circuit 4023 receives and/or sends a signal by using at least one of the antennas 406. For example, when the subsequent method embodiment is applied to the terminal device, the low-power transceiver circuit 4023 performs an operation performed by a transceiver module in the terminal device.

The processor 404 may be configured to execute the instructions stored in the memory 403, to control the transceiver 402 to receive a message and/or send a message, to realize a function of the communication apparatus in the method embodiment of this application. In an implementation, it may be considered that a function of the transceiver 402 is implemented through a transceiver circuit or a dedicated transceiver chip. In this embodiment of this application, that the transceiver 402 receives a message may be understood as that the transceiver 402 inputs a message, and that the transceiver 402 sends a message may be understood as that the transceiver 402 outputs a message.

The memory 403 may be various types of storage media, for example, a random access memory (Random Access Memory, RAM), a read-only memory (Read-Only Memory, ROM), a non-volatile RAM (Non-Volatile RAM, NVRAM), a programmable ROM (Programmable ROM, PROM), an erasable PROM (Erasable PROM, EPROM), an electrically erasable PROM (Electrically Erasable PROM, EEPROM), a flash memory, an optical memory, and a register. The memory 403 is specifically configured to store the instructions 4031 and the data 4032. The processor 404 may perform the steps and/or the operations in the method embodiment of this application by reading and executing the instructions 4031 stored in the memory 403. The data 4032 may need to be used in a process of performing the operations and/or the steps in the method embodiment of this application.

Optionally, the communication apparatus may further include the I/O interface 410. The I/O interface 410 is configured to receive instructions and/or data from a peripheral device, and output instructions and/or data to the peripheral device.

The foregoing content briefly describes the system architecture and possible application scenarios of embodiments of this application, to better understand the technical solutions of embodiments of this application. The following describes some background technologies in embodiments of this application.

### 1. Communication status

There are three states of a terminal device in a communication system: A status of a terminal device may be divided into an idle state (idle), an inactive state (inactive), and a connected state (connected) based on a connection state of the terminal device and a core network. When the terminal device is in the connected state, the terminal device may communicate with a base station through dynamic scheduling of the base station, to transmit data. When the terminal device is in the idle state, if the terminal device needs to transmit data, the terminal device needs to first perform random access, and can transmit data only after establishing an RRC connection to the base station, or transmit uplink information in a message 3 (message 3, Msg3) in a random access process. When the terminal device is in the inactive state, both the terminal device and the core network side store context of an RRC message existing when the terminal device is in the connected state. If the terminal device needs to transmit data, the terminal device may access the connected state more quickly based on the stored context of the RRC message, to transmit the data.

### 2. Paging

Paging (Paging) means that a network device searches for a terminal. For example, when the network device needs to send downlink information, the network device sends paging information to the terminal, where the paging information carries an identifier of the terminal. If the terminal detects that the identifier of the terminal is in the paging information, the terminal sends a request to the network device to access a network. A terminal in an idle (idle) state monitors downlink control information (downlink control information, DCI) on a specific time-frequency resource. If the terminal detects that paging information is delivered, the terminal receives the paging information based on an indication in the DCI. A particular time domain resource used for monitoring the DCI corresponding to the paging information is referred to as a paging occasion (paging occasion, PO). The paging occasion is also referred to as a paging moment. A moment of detecting the DCI on the PO is usually referred to as a physical downlink control channel (physical downlink control channel, PDCCH) monitoring moment, and detecting the DCI on the PO is also referred to as monitoring a PDCCH.

### 3. Wake up signal (wake up signal, WUS)

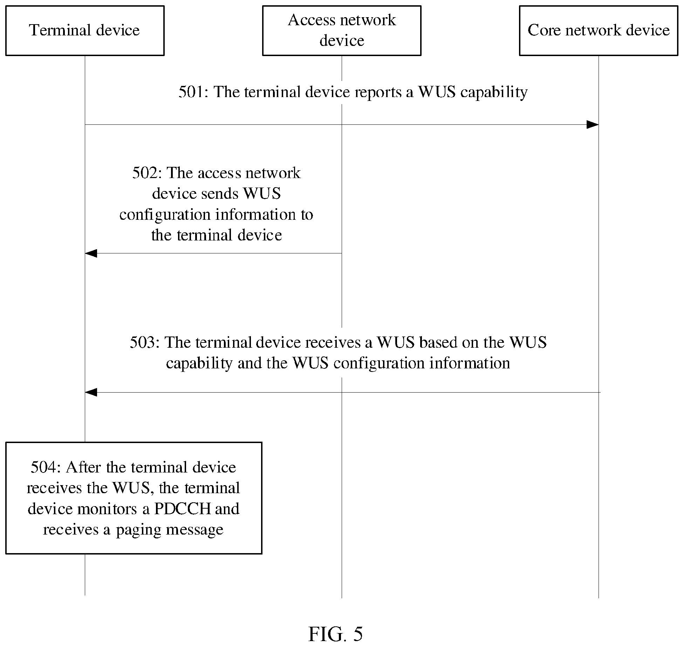

For an existing procedure of a wake up signal, refer to FIG. 5. FIG. 5 is a schematic flowchart of a wake up signal according to an embodiment of this application. The procedure of a wake up signal includes the following steps:
501: A terminal device reports a WUS capability.

The terminal device reports the WUS capability supported by the terminal device. The WUS capability includes but is not limited to a wake up time. The wake up time is a time period in which the terminal device is woken up and monitors a wake up signal.

502: An access network device sends WUS configuration information to the terminal device.

The WUS configuration information includes but is not limited to:
(1) information about maximum duration of the WUS, used to indicate a maximum sending time period of the wake up signal WUS;
(2) a quantity of POs, used to indicate a quantity of POs associated with one WUS;
(3) a quantity of UE groups, used to indicate a quantity of groups of UEs associated with one WUS, or used to indicate a quantity of groups of UEs associated with one PO;
(4) frequency position information, used to indicate a frequency position at which a WUS is sent; or
(5) time position information, used to indicate a time position at which the WUS is sent.
In a possible implementation, the time position information may be used to indicate a time position, relative to the PO, at which the WUS is sent, for example, time between an end moment of sending the WUS and a first PO associated with the WUS.

503: The terminal device receives the WUS based on the WUS capability and the WUS configuration information.

The terminal device receives the WUS based on the WUS capability of the terminal device and the WUS configuration information from the access network device.

504: After the terminal device receives the WUS, the terminal device monitors a PDCCH and receives a paging message.

After the terminal device receives the WUS from the access network device, the terminal device monitors the PDCCH and receives the paging message. When the terminal device receives no WUS from the access network device, the terminal device does not monitor the PDCCH.

In the foregoing WUS procedure, the terminal device needs to monitor whether there is a paging message or a system message change notification in a corresponding PO in each DRX cycle. Therefore, a WUS is introduced before each PO. The WUS indicates whether the terminal device is paged in one or more subsequent POs. Only a terminal device that receives the WUS is a paged terminal device, and the paged terminal device monitors the PDCCH and receives the paging message in the PO.

Compared with the procedure of monitoring the PDCCH corresponding to the paging message, the procedure of monitoring the WUS reduces only a quantity of repeated times of monitoring or monitoring duration to an extent, but does not greatly reduce power consumption. Based on this, this application proposes a communication method, applied to a terminal device, an access network device, and/or a core network device. The following provides description with reference to the accompanying drawings.

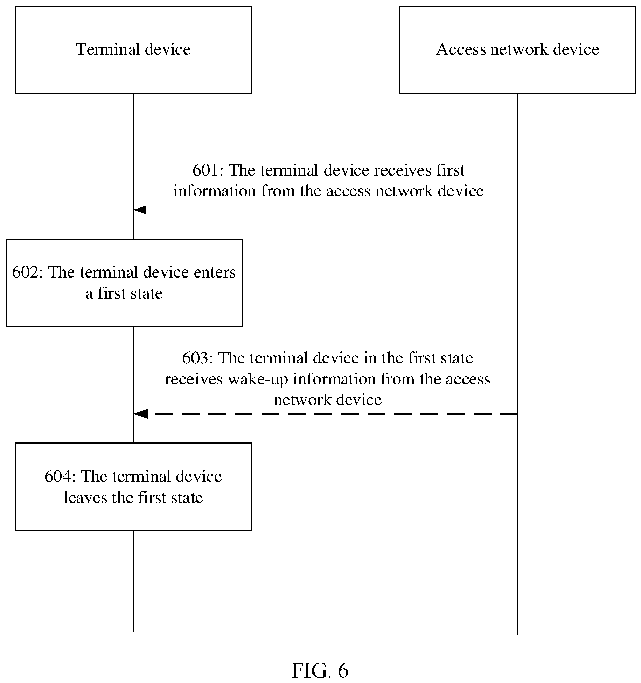

FIG. 6 is a schematic flowchart of a communication method according to an embodiment of this application. The communication method provided in this embodiment of this application includes the following steps.

601: A terminal device receives first information from an access network device.

The access network device sends the first information to the terminal device, and the terminal device enters a first state based on the first information.

Optionally, the first information may include redirection indication information, and whether a cell or a frequency indicated by redirection supports the terminal in the first state.

Optionally, the first information includes information about a cell or a frequency that supports configuration of the first state.

Optionally, the first information may further include a paging probability, and the first information indicates a terminal device with the same paging probability to enter the first state. For example, when the paging probability included in the first information is 0.75, a terminal device whose paging probability is 0.75 in terminal devices that receive the first information enters the first state. For another example, when the paging probability included in the first information is (0.75-1], a terminal device, in the terminal devices that receive the first information, whose paging probability is within the (0.75-1] interval enters the first state.

Optionally, the first information may be carried in an RRC release message, or the first information is an RRC connection release message.

602: The terminal device enters the first state.

After receiving the first information, the terminal device may directly enter the first state, or the terminal device may enter the first state after a period of time. The waiting time period is determined based on duration of a timer of the first state. The timer may be configured by the access network device for the terminal, or may be configured by a core network device for the terminal. For example, the core network device configures the timer for the terminal device through the access network device. For example, when the duration of the timer of the first state is 5 seconds, after receiving the first information, the terminal device starts the timer of the first state. After the timer of the first state is started for 5 seconds, the terminal device enters the first state.

The following describes the first state provided in this embodiment of this application. The first state is a state of the terminal device.

In a possible implementation, the first state is similar to a powered-off state for the terminal device. The terminal device in the first state maintains registration with the core network device and an air interface configuration, where the air interface configuration includes but is not limited to a priority configuration. The terminal device in the first state does not perform idle-state behavior such as intra-frequency measurement, inter-frequency measurement, cell measurement, and/or cell reselection. Behavior of the terminal device in the first state is limited, so that power consumption of the terminal device is further reduced.

In another possible implementation, the first state is similar to a powered-off state for the terminal device. The terminal device in the first state maintains registration with the core network device and an air interface configuration, where the air interface configuration includes but is not limited to a priority configuration. The terminal device in the first state performs idle-state behavior such as relaxed intra-frequency measurement, relaxed inter-frequency measurement, relaxed cell measurement, and/or relaxed cell reselection. The relaxed intra-frequency measurement/inter-frequency measurement/cell measurement means that, compared with intra-frequency measurement/inter-frequency measurement/cell measurement in an idle state or an inactive state defined in an existing protocol, the relaxed intra-frequency measurement/inter-frequency measurement/cell measurement has a longer measurement period, for example, a quantity of DRX cycles for measurement is larger. The relaxed cell reselection means that, compared with cell reselection in an idle state or an inactive state defined in an existing protocol, the relaxed cell reselection has a lower threshold for triggering cell reselection or triggering cell measurement. Behavior of the terminal device in the first state is limited, so that power consumption of the terminal device is further reduced.

The terminal device in the first state does not receive one or more of the following information from the access network device: a paging message, a synchronization message, a system message, or a reference signal. The terminal device in the first state receives wake-up information. The wake-up information includes but is not limited to a wake up signal (wake up signal), a wake-up indication (wake up indicator), or another indication. Optionally, a low-power transceiver circuit in the terminal device is configured to receive the wake-up information. Optionally, the terminal device in the first state does not receive downlink data other than the wake-up information.

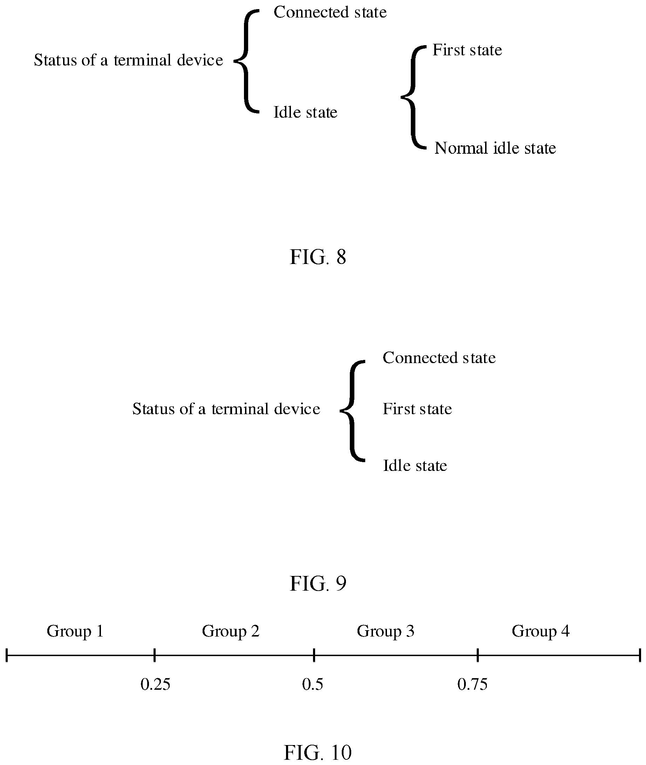

In a possible implementation, the first state is a subset of the idle state. For ease of understanding, FIG. 8 is a schematic diagram of the first state according to this embodiment of this application. The first state and the idle state that is defined in the existing protocol j ointly form an idle state. In this embodiment of this application, the idle state defined in the existing protocol is referred to as a normal idle state. Specifically, a status of the terminal device may be divided into a connected state and an idle state. The idle state includes the first state and the normal idle state. It should be noted that the status of the terminal device refers to a connection status of signaling between the terminal device and an AMF. The normal idle state may also be referred to as an awake state (awake state), and the first state may also be referred to as a doze state (doze state).

In another possible implementation, the first state is parallel to the normal idle state, and the first state, the idle state, and the connected state jointly form the status of the terminal device. For ease of understanding, FIG. 9 is another schematic diagram of the first state according to this embodiment of this application. The status of the terminal device may be divided into the first state, the connected state, and the idle state. The idle state is an idle state defined in the existing protocol, that is, the "normal idle state" in FIG. 8. It should be noted that the status of the terminal device refers to a connection status of signaling between the terminal device and an AMF.

In another possible implementation, the first state is parallel to a normal inactive state, and the first state, the inactive state, the idle state, and the connected state jointly form the status of the terminal device. The inactive state is also referred to as an inactive mode. The inactive state may also be referred to as the "normal inactive state", and the first state may also be referred to as the doze state or a sleep state. It should be noted that the first state of the terminal device refers to a connection state of signaling between the terminal device and the access network device.

603: The terminal device in the first state receives the wake-up information from the access network device.

Optionally, after the access network device sends the wake-up information to the terminal device, the terminal device may send feedback information to the access network device. The feedback information may include all or a part of the wake-up information. The feedback information indicates that the terminal device successfully receives the wake-up information.

After receiving the feedback information from the terminal device, the access network device continues to perform a subsequent procedure, for example, sending the paging message to the terminal device or sending downlink data to the terminal device. After the access network device sends the wake-up information to the terminal device, if the access network device receives no feedback information from the terminal device within a period of time, the access network device determines that waking up the terminal device this time fails (that is, it indicates that the terminal device fails to leave the first state). After increasing a power of the wake-up information, the access network device sends the wake-up information with the increased power to the terminal device. Alternatively, the access network device repeatedly sends the wake-up information. For example, the access network device repeatedly sends the wake-up information five times. Alternatively, the access network device sends the wake-up information to the terminal device after reducing a modulation order of a modulation and coding scheme (Modulation and Coding Scheme, MCS).

Optionally, the access network device may determine, based on second information reported by the terminal device, whether there is sufficient time in a current PO to wake up the terminal device (that is, send the wake-up information to the terminal device, to indicate the terminal device to leave the first state). If the time is sufficient, the access network device resends the wake-up information in the current PO. If the time is insufficient, the access network device sends the wake-up information to the terminal device in a next PO or another PO.

The wake-up information may include an identifier of the terminal device and/or a group identifier of the terminal device. The identifier of the terminal device included in the wake-up information indicates a corresponding terminal device to leave the first state.

Optionally, the group identifier of the terminal device included in the wake-up information indicates a corresponding group of terminal devices to leave the first state or enter a normal idle state, an inactive state, or a connected state.

Optionally, the wake-up information includes some configuration information. A terminal that receives the information determines, based on a condition of the terminal, whether to leave the first state. In other words, the terminal device does not leave the state immediately after receiving the wake-up information.

Optionally, the group identifier of the terminal device included in the wake-up information indicates that a corresponding group of terminal devices can leave the first state, but whether a specific terminal device in the group of terminal devices leaves the first state further needs to be determined based on an indication of a paging message from the access network device. For example, when the wake-up information includes the group identifier of the terminal device, the terminal device that receives the wake-up information first determines whether the terminal device belongs to a group corresponding to the group identifier. If the terminal device belongs to the group corresponding to the group identifier, the terminal device monitors a paging message. When the paging message includes the identifier of the terminal device, the terminal device initiates a network access procedure; or when the paging message does not include the identifier of the terminal device, the terminal device continues to maintain the first state.

604: The terminal device leaves the first state.

The terminal device may leave the first state based on a plurality of conditions, which are separately described below.

After the terminal device in the first state receives the wake-up information from the access network device, the terminal device leaves the first state based on the wake-up information. The wake-up information indicating the terminal device to leave the first state may be a type of special wake-up information, for example, a wake-up indication.

In the first state, when the timer of the first state of the terminal device expires, and the terminal device receives no wake-up information from the access network device, the terminal device leaves the first state.

When the terminal device in the first state receives no wake-up information from the access network device in N consecutive paging occasions (or in N paging cycles), the terminal device leaves the first state, where N is a positive integer.

After leaving the first state, the terminal device may directly access a network. For example, when the wake-up information includes the identifier of the terminal device, the terminal device directly accesses the network based on the identifier of the terminal device. When the wake-up information includes the group identifier of the terminal device, the terminal device directly accesses the network based on the group identifier of the terminal device.

After leaving the first state, the terminal device may alternatively receive a paging message from the access network device, and initiate a network access procedure. For example, when the wake-up information includes the group identifier of the terminal device, the terminal device that receives the wake-up information first determines whether the terminal device belongs to a group corresponding to the group identifier. If the terminal device belongs to the group corresponding to the group identifier, the terminal device monitors the paging message. When the paging message includes the identifier of the terminal device, the terminal device initiates the network access procedure; or when the paging message does not include the identifier of the terminal device, the terminal device continues to maintain the first state.

In this embodiment of this application, with the low-power first state introduced, power consumption of the terminal device is reduced. The terminal device in the first state may be woken up in a plurality of manners, to ensure normal running of a service of the terminal device. Compared with an existing WUS technology, time for monitoring a PDCCH is reduced for the terminal device, and power consumption of the terminal device is further reduced. The terminal device may further monitor the wake-up information through the low-power transceiver circuit to further reduce power consumption of the terminal device.

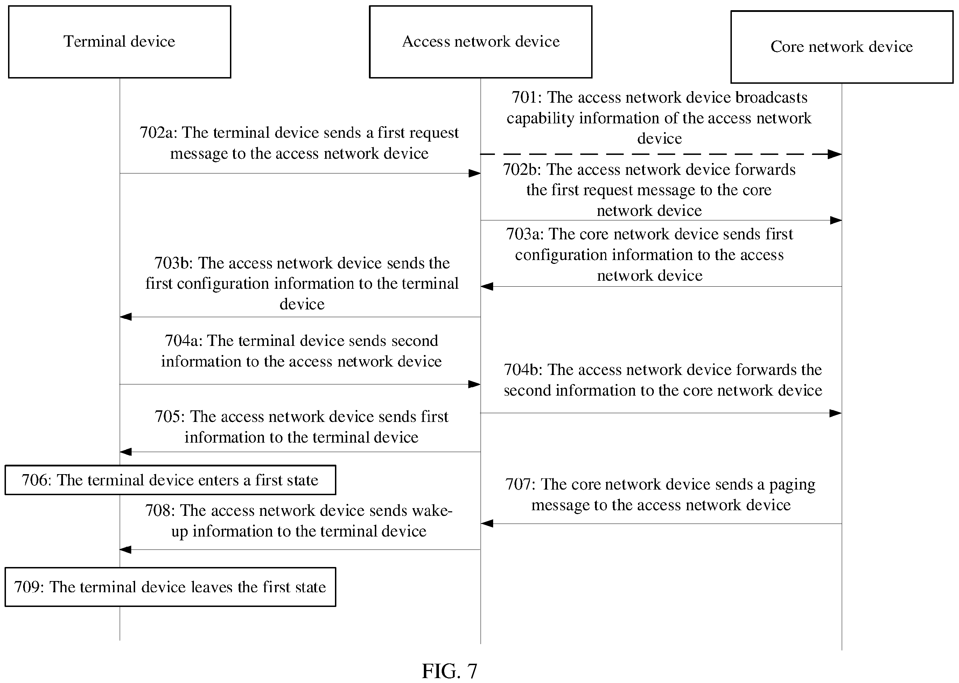

With reference to the embodiment shown in FIG. 6, FIG. 7 is another schematic flowchart of a communication method according to an embodiment of this application. The communication method provided in this embodiment of this application includes the following steps.

701: An access network device broadcasts capability information of the access network device.

Step 701 is an optional step.

The access network device may broadcast the capability information of the access network device, where the capability information indicates whether the access network device supports a first state.

A terminal device that supports the first state or a wake up signal and the access network device perform related operations in the embodiment shown in FIG. 6. For example, the terminal device that supports the first state and the access network device perform the following operations: The access network device sends first information to the terminal device, to indicate the terminal device to enter the first state. The terminal device in the first state receives wake-up information from the access network device. The terminal device leaves the first state based on the wake-up information.

Optionally, the access network device may further broadcast related configuration information of the first state. The configuration information includes but is not limited to: information about whether to wake up the terminal device based on a group of the terminal device, a sending rate of the wake-up information, a DRX cycle, or an extended discontinuous reception (Extended Discontinuous Reception, eDRX) cycle. The group is a group of terminal devices. For example, a group of a terminal device 1, a terminal device 2, and a terminal device 3 is a group 1, and a group of a terminal device 4, a terminal device 5, and a terminal device 6 is a group 2. A group identifier of the terminal device 1, the terminal device 2, and the terminal device 3 may be "group 1", and a group identifier of the terminal device 4, the terminal device 5, and the terminal device 6 may be "group 2". The waking up the terminal device means that the access network device indicates, by sending the wake-up information to the terminal device, the terminal device to leave the first state.

Optionally, the access network device may further broadcast a list of cells that support the first state or a list of frequencies that support the first state. The access network device provides a related service of the first state for a cell that supports the first state, for example, sends wake-up information to the cell. The access network device provides a related service of the first state for a cell determined based on the frequency list.

Optionally, the access network device broadcasts, through a system message, the list of cells that support the first state or the list of frequencies that support the first state.

702a: The terminal device sends a first request message to the access network device.

In steps 702a and 702b, the terminal device sends the first request message to a core network device. Specifically, the terminal device sends the first request message to the core network device through the access network device. The terminal device may request a network side to configure the first state, to avoid a case that the terminal device cannot enter the first state due to incompatibility between the terminal device and the network side, or that the terminal device cannot leave the first state because the terminal device moves to an area that does not support the first state.

Step 702a is described below. The terminal device sends the first request message to the access network device, where the first request message is used to request to configure the first state. The first request message includes one or more pieces of the following information: a request for configuration of duration of a timer of the first state, or a request for configuration of N paging occasions (or N paging cycles). N is a positive integer, and N indicates a maximum quantity of continuous paging occasions for the terminal device.

For example, the first request message may be carried in a registration request (registration request), or the first request message may be carried in a tracking area update (tracing area update, TAU) request.

702b: The access network device forwards the first request message to the core network device.

In step 702b, after receiving the first request message, the access network device forwards the first request message to the core network device. The core network device may be an access and mobility management function (access and mobility management function, AMF), or may be a network element or a network function of another core network. This is not limited herein.

Optionally, the access network device does not identify the first request message. After receiving the first request message from the terminal device, the access network device directly forwards the first request message to the core network device.

703a: The core network device sends first configuration information to the access network device.

After the core network device receives the first request message from the terminal device, the core network device performs configuration for the terminal device. Specifically, the core network device sends the first configuration information to the terminal device through the access network device, where the first configuration information is used to configure the first state of the terminal device.

The first configuration information includes one or more pieces of the following information: the duration of the timer of the first state, a group identifier of the terminal device, an identifier of the terminal device, or the N paging occasions (or the N paging cycles). Specifically, the first state is configured for the terminal device corresponding to the identifier of the terminal device. For example, when the identifier of the terminal device included in the first configuration information is "UE1", the first state is configured based on the first configuration information for the terminal device (for example, the terminal device 1) corresponding to the identifier "UE1" of the terminal device.

Alternatively, the first state is configured for one or more terminal devices corresponding to the group identifier of the terminal device. For example, when the group identifier of the terminal device included in the first configuration information is "group 1", the first state is configured based on the first configuration information for terminal devices (for example, the terminal device 1, the terminal device 2, and the terminal device 3) corresponding to the group identifier "group1".

Optionally, the duration of the timer of the first state may be the same as duration of a TAU timer (timer).

Optionally, the duration of the timer of the first state may also be related to an actual service, that is, may be equal to a service arrival period.

For example, the first configuration information may be carried in a registration accept message, or the first configuration information may be carried in a tracking area update accept message. This is not limited herein.

The following describes the identifier of the terminal device and the group identifier of the terminal device in this embodiment of this application. The terminal device is identified in a plurality of manners, thereby improving implementation flexibility of the solution. Signaling overheads can be reduced, and a delay of waking up the terminal device can be reduced.

The identifier of the terminal device may be a 5G globally unique temporary identity (5G Globally Unique Temporary UE Identity, 5G-GUTI). The 5G-GUTI includes a globally unique AMF identifier (globally unique AMF identifier, GUAMI) and a 5G temporary mobile subscriber identity (5G Temporary Mobile Subscriber Identity, 5G-TMSI). The GUAMI indicates an AMF that provides a service for the terminal device.

Alternatively, the identifier of the terminal device may be a 5G-S-TMSI, and the 5G-S-TMSI is a shortened form compared with the 5G-GUTI. The 5G-S-TMSI includes an identifier (AMF set ID) of a set to which the AMF belongs, an AMF pointer (AMF pointer), and the 5G-TMSI.

Alternatively, the identifier of the terminal device may be a radio network temporary identifier (radio network temporary identifier, RNTI) allocated by the access network device, for example, a full RNTI or a truncated RNTI. The truncated RNTI is a part of a full RNTI, for example, some bits of the full RNTI. For example, the identifier of the terminal device may be a full inactive-radio network temporary identifier (full inactive-radio network temporary identifier, fullI-RNTI), or the identifier of the terminal device may be some bits of a fullI-RNTI.

The group identifier of the terminal device may be a service identifier allocated by the core network device based on a service (service). Terminal devices of a same service are grouped into a same group.

Alternatively, the group identifier of the terminal device may be a session identifier allocated by the core network device based on a session (session). Terminal devices that use a same session are grouped into a same group.

Alternatively, the group identifier of the terminal device may be a group identifier allocated by the core network device based on a paging probability of the terminal device. Terminal devices in a same paging probability range are grouped into a same group. The paging probability range indicates that a probability that the terminal device is paged falls within the range interval. The paging probability may be obtained through negotiation between the terminal device and the core network device. For ease of understanding, FIG. 10 is a schematic diagram of groups of paging probabilities according to an embodiment of this application. As shown in FIG. 10, for example, a terminal device whose paging probability is [0-0.25) is allocated to a group 1, a terminal device whose paging probability is [0.25-0.5) is allocated to a group 2, a terminal device whose paging probability is [0.5-0.75) is allocated to a group 3, and a terminal device whose paging probability is [0.75-1] is allocated to a group 4.

Another implementation of grouping the terminal devices based on the paging probabilities is as follows: After the paging probability is obtained through negotiation between the terminal device and the core network device, the core network device includes the paging probability of the terminal device in the paging message when sending the paging message. When sending the wake up signal, the access network device includes the group identifier of the terminal device that is determined based on the paging probability in the wake up signal. Specifically, the access network device broadcasts a manner of grouping the terminal devices, for example, the manner indicates that a terminal device whose paging probability is [0.25-0.5) belongs to the group 1, and a terminal device whose paging probability is [0.75-1] belongs to the group 2. When the access network device sends the wake-up information again, the group identifier is carried. The terminal device determines, by receiving the broadcast group identifier of the terminal device, a group to which the terminal device belongs. Further, after the terminal device receives the wake up signal, if the group identifier in the wake up signal is consistent with the group to which the terminal device belongs, the terminal device is woken up.

In another possible implementation, the wake-up information directly carries a probability that the terminal is paged, and a terminal whose paging probability matches the carried paging probability is woken up, that is, the terminal receives a paging message or directly initiates access. In another possible implementation, the paging probability may alternatively be a quantity of times the terminal device is paged in a unit time period. For example, a terminal device that is paged less than 20 times within one hour is allocated to the group 1, a terminal device that is paged less than 50 times and greater than or equal to 20 times within one hour is allocated to the group 2, and a terminal device that is paged more than 50 times within one hour is allocated to the group 3.

In another possible implementation, the group identifier of the terminal device may be implemented in a form of a bitmap (bitmap). For example, the group identifier in the wake-up information is a string of bits. A first bit of the bit string indicates the group 1, a second bit of the bit string indicates the group 2, and so on. When a bit is 1, it indicates that the terminal device in the group is woken up; and when the bit is 0, it indicates that the terminal device in the group is not woken up. The first bit indicates the group 1, the second bit indicates the group 2, and so on.

For example, the first configuration information may be the registration accept message, the TAU accept message, or another NAS message. This is not limited herein.

703b: The access network device sends the first configuration information to the terminal device.

After receiving the first configuration information from the core network device, the access network device forwards the first configuration information to the terminal device. Optionally, the access network device forwards the first configuration information to the terminal device without identifying the first configuration information.

704a: The terminal device sends second information to the access network device.

After a radio resource control (Radio Resource Control, RRC) connection between the terminal device and the access network device is established, the terminal device sends the second information to the access network device. The second information may be referred to as capability information supported by the terminal device. The second information indicates one or more pieces of the following information:
information about whether the terminal device supports configuration of the first state; a processing delay after the terminal device receives the wake-up information from the access network device; or a minimum time period from receiving, by the terminal device, the wake-up information from the access network device to receiving the paging message from the access network device.

In a possible implementation, the terminal device includes a low-power transceiver circuit. The low-power transceiver circuit is configured to receive the wake-up information. The processing delay after the terminal device receives the wake-up information from the access network device is a time period in which the low-power transceiver circuit receives the wake-up information, processes the wake-up information, and sends an activation command to a main circuit of the terminal device.

The minimum time period from receiving, by the terminal device, the wake-up information from the access network device to receiving the paging message from the access network device is a minimum time period required for processing the wake-up information after the terminal device receives the wake-up information and before the terminal device receives the paging message.

The second information may further include one or more pieces of the following information:
information about whether the terminal device supports receiving the wake-up information, information about whether the terminal device supports leaving the first state based on the wake-up information, a minimum processing time period required by the low-power transceiver circuit in the terminal device to send the activation command to the main circuit of the terminal device, information about whether the terminal device supports configuration of the first state based on the group identifier (that is, whether the terminal device supports configuration of the first state based on a group), or a paging probability range of the terminal device. The paging probability range indicates that a probability that the terminal device is paged falls within the range interval.

For example, the processing delay after the terminal device receives the wake-up information from the access network device may be 20 milliseconds (ms), 40 ms, 240 ms, 1000 ms, or 2000 ms.

The second information may be carried in terminal device capability information (UECapability Information).

The terminal device may report capability information (namely, the second information) of the terminal device to the network side, to avoid the case that the terminal device cannot enter the first state due to incompatibility between the terminal device and the network side.

704b: The access network device forwards the second information to the core network device. After receiving the second information from the terminal device, the access network device forwards the second information to the core network device.

705: The access network device sends the first information to the terminal device.

The access network device sends the first information to the terminal device, and the terminal device enters the first state based on the first information.

The first information may indicate the terminal device to enter the first state, or the first information may indicate a terminal device in a group to enter the first state. The first information may further indicate a terminal device in a redirected cell to enter the first state. The first information may further indicate terminal devices in one or more cells to enter the first state.

Optionally, the first information may further include a paging probability, and the first information indicates a terminal device with the same paging probability to enter the first state. For example, when the paging probability included in the first information is 0.75, a terminal device whose paging probability is 0.75 in terminal devices that receive the first information enters the first state. For another example, when the paging probability included in the first information is (0.75-1], a terminal device, in the terminal devices that receive the first information, whose paging probability is within the (0.75-1] interval enters the first state.

Optionally, the first information may be carried in an RRC release message.

706: The terminal device enters the first state.

Step 706 is similar to step 602, and details are not described herein again.

After step 706, the terminal device that enters the first state may leave the first state based on the wake-up information from the access network device, which corresponds to steps 707 and 708. Alternatively, after step 706, the terminal device that enters the first state may leave the first state based on another condition. For details, refer to descriptions of step 709.

707: The core network device sends the paging message to the access network device.

When the core network device has downlink data, a destination of the downlink data is the terminal device in the first state. The core network device sends the paging message to the access network device.

Optionally, the paging message includes first indication information. The first indication information indicates the access network device to indicate, by using wake-up information, the terminal device to leave the first state. In other words, the paging message includes one piece of explicit indication information, and the explicit indication information is referred to as the first indication information. After receiving the paging message, the access network device sends wake-up information to the terminal device based on the first indication information, where the wake-up information indicates the terminal device to leave the first state.

Optionally, the paging message sent by the core network device to the access network device includes configuration information of the wake-up information. The configuration information of the wake-up information includes one or more of the following: the identifier of the terminal device, the group identifier, information about whether to wake up the terminal device based on a group of the terminal device, a sending rate of the wake-up information, a DRX cycle, or an extended discontinuous reception eDRX cycle. The configuration information of the wake-up information is used to configure a manner in which the access network device uses the wake-up information to indicate the terminal device to leave the first state.

In another possible implementation, when the core network device has downlink data, the core network device sends the first indication information to the access network device. In this case, the core network device indicates, through the first indication information, the access network device to indicate, by using wake-up information, the terminal device to leave the first state. In other words, the core network device indicates, without using the paging message, the access network device to indicate, by using wake-up information, the terminal device to leave the first state. The paging message and the first indication information are independent of each other.

In another possible implementation, the access network device indicates the terminal device to enter the first state. The first state may be a subset of an inactive state. The core network device does not know that the terminal device enters the first state. When the core network device sends downlink data to the terminal device, the access network device receives the downlink data. After receiving the downlink data, the access network device determines whether the terminal device is in the first state. If the access network device determines that the terminal device is in the first state, the access network device sends the wake-up information to the terminal device, to indicate the terminal device to leave the first state.

708: The access network device sends the wake-up information to the terminal device.

The access network device sends the wake-up information to the terminal device based on the paging message (or the first indication information) from the core network device.

Optionally, after the access network device sends the wake-up information to the terminal device, the terminal device may send feedback information to the access network device. The feedback information may include all or a part of the wake-up information. The feedback information indicates that the terminal device successfully receives the wake-up information.

After receiving the feedback information from the terminal device, the access network device continues to perform a subsequent procedure, for example, sending the paging message to the terminal device or sending downlink data to the terminal device. After the access network device sends the wake-up information to the terminal device, if the access network device receives no feedback information from the terminal device within a period of time, the access network device determines that waking up the terminal device this time fails (that is, it indicates that the terminal device fails to leave the first state). After increasing a power of the wake-up information, the access network device sends the wake-up information with the increased power to the terminal device. Alternatively, the access network device repeatedly sends the wake-up information. For example, the access network device repeatedly sends the wake-up information five times. Alternatively, the access network device sends the wake-up information to the terminal device after reducing a modulation order of a modulation and coding scheme (Modulation and Coding Scheme, MCS).

Optionally, the access network device may determine, based on the second information reported by the terminal device, whether there is sufficient time in a current PO to wake up the terminal device (that is, send the wake-up information to the terminal device, to indicate the terminal device to leave the first state). If the time is sufficient, the access network device resends the wake-up information in the current PO. If the time is insufficient, the access network device sends the wake-up information to the terminal device in a next PO or another PO.

The wake-up information may include an identifier of the terminal device and/or a group identifier of the terminal device. The identifier of the terminal device included in the wake-up information indicates a corresponding terminal device to leave the first state.

Optionally, the group identifier of the terminal device included in the wake-up information indicates a corresponding group of terminal devices to leave the first state.

Optionally, the group identifier of the terminal device included in the wake-up information indicates that a corresponding group of terminal devices can leave the first state, but whether a specific terminal device in the group of terminal devices leaves the first state further needs to be determined based on an indication of a paging message from the access network device. For example, when the wake-up information includes the group identifier of the terminal device, the terminal device that receives the wake-up information first determines whether the terminal device belongs to a group corresponding to the group identifier. If the terminal device belongs to the group corresponding to the group identifier, the terminal device monitors the paging message. When the paging message includes the identifier of the terminal device, the terminal device initiates a network access procedure; or when the paging message does not include the identifier of the terminal device, the terminal device continues to maintain the first state.

709: The terminal device leaves the first state.

The terminal device may leave the first state based on a plurality of conditions, which are separately described below.

After the terminal device in the first state receives the wake-up information from the access network device, the terminal device leaves the first state based on the wake-up information. The wake-up information indicating the terminal device to leave the first state may be a type of special wake-up information, for example, a wake-up indication.

In the first state, when the timer of the first state of the terminal device expires, and the terminal device receives no wake-up information from the access network device, the terminal device leaves the first state.

When the terminal device in the first state receives no wake-up information from the access network device in the N consecutive paging occasions (the N paging cycles), the terminal device leaves the first state.

After leaving the first state, the terminal device may directly access a network. For example, when the wake-up information includes the identifier of the terminal device, the terminal device directly accesses the network based on the identifier of the terminal device.

After leaving the first state, the terminal device may alternatively receive the paging message from the access network device, and initiate the network access procedure. For example, when the wake-up information includes the group identifier of the terminal device, the terminal device that receives the wake-up information first determines whether the terminal device belongs to a group corresponding to the group identifier. If the terminal device belongs to the group corresponding to the group identifier, the terminal device monitors the paging message. When the paging message includes the identifier of the terminal device, the terminal device initiates the network access procedure; or when the paging message does not include the identifier of the terminal device, the terminal device continues to maintain the first state.

In this embodiment of this application, with the low-power first state introduced, power consumption of the terminal device is reduced. The terminal device in the first state may be woken up in a plurality of manners, to ensure normal running of a service of the terminal device. Compared with an existing WUS technology, time for monitoring a PDCCH is reduced for the terminal device, and power consumption of the terminal device is further reduced. The terminal device may further monitor the wake-up information through the low-power transceiver circuit to further reduce power consumption of the terminal device.

The foregoing mainly describes the solutions provided in embodiments of this application from the perspective of the methods. It may be understood that, to implement the foregoing functions, the communication apparatus (the access network device, the core network device, and/or the terminal device) includes corresponding hardware structures and/or software modules for performing the functions. A person of ordinary skill in the art should easily be aware that, in combination with the example modules and algorithm steps described in embodiments disclosed in this specification, this application can be implemented by hardware or a combination of hardware and computer software. Whether a function is performed by hardware or hardware driven by computer software depends on particular applications and design constraints of the technical solutions. A skilled person may use different methods to implement the described functions for each particular application, but it should not be considered that the implementation goes beyond the scope of this application.

In embodiments of this application, the communication apparatus may be divided into functional modules based on the foregoing method examples. For example, the functional modules may be obtained through division based on the functions, or two or more functions may be integrated into one processing module. The integrated module may be implemented in a form of hardware, or may be implemented in a form of a software functional module. It should be noted that, in embodiments of this application, division into the modules is an example and is merely logical function division, and there may be other division in an actual implementation.

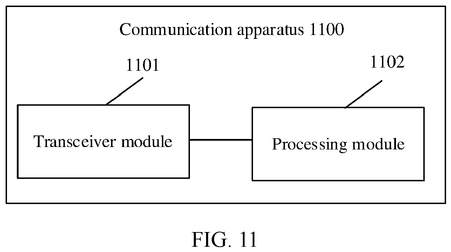

The following describes in detail a communication apparatus in this application. FIG. 11 is a schematic diagram of an embodiment of the communication apparatus according to an embodiment of this application. The communication apparatus may be deployed in a terminal device, an access network device, a core network device, or a chip system. The communication apparatus 1100 includes a transceiver module 1101 and a processing module 1102. The communication apparatus 1100 may be configured to perform steps performed by the terminal device, the access network device, or the core network device in FIG. 6 to FIG. 10. For details, refer to related descriptions in the foregoing method embodiments.

For example, the transceiver module 1101 is configured to receive first information from the access network device.

The processing module 1102 is configured to enter a first state based on the first information.

The transceiver module 1101 is further configured to: receive, in the first state, wake-up information from the access network device, and skip receiving, in the first state, one or more pieces of the following information from the access network device: a paging message, a synchronization signal, or a system message.

The processing module 1102 is further configured to: leave the first state based on the wake-up information, and receive the one or more pieces of information from the access network device; or leave the first state based on the wake-up information, and initiate a random access request.

In a possible implementation, in the first state, intra-frequency measurement, inter-frequency measurement, cell measurement, and/or cell reselection are not performed.

In a possible implementation, the transceiver module 1101 is further configured to send a first request message to the access network device. The first request message is used to request to configure the first state. The first request message includes one or more pieces of the following information: a request for configuration of duration of a timer of the first state, or a request for configuration of N paging occasions. A destination of the first request message is the core network device.

The transceiver module 1101 is further configured to receive first configuration information from the access network device. The first configuration information includes one or more pieces of the following information: the duration of the timer of the first state, a group identifier of the terminal device, an identifier of the terminal device, or the N paging occasions. The first configuration information is determined by the core network device based on the first request message.

In a possible implementation, the transceiver module 1101 is further configured to send second information to the access network device. The second information indicates one or more pieces of the following information:
information about whether configuration of the first state is supported;
a processing delay after the wake-up information from the access network device is received; or
a minimum time period from receiving the wake-up information from the access network device to receiving the paging message.

In a possible implementation, the first information further indicates one or more pieces of the following information: a cell identifier, and information about whether a cell determined by the cell identifier supports sending the wake-up information; or a frequency identifier, and information about whether a cell determined by the frequency identifier supports the terminal device in the first state. This prevents a terminal device that does not support entering the first state from entering the first state, and reduces signaling overheads.

In a possible implementation, the wake-up information includes one or more of the following: the identifier of the terminal device, an identifier of a group to which the terminal device belongs, or a paging probability range. The paging probability range indicates that a probability that the terminal device is paged falls within the range interval.

In a possible implementation, the processing module 1102 is further configured to: when entering an idle state from a connected state or entering an inactive state from a connected state, if the timer of the first state does not expire, enter the first state.

For another example, the transceiver module 1101 is configured to receive first information from the access network device.

The processing module 1102 is configured to enter a first state based on the first information.

The processing module 1102 is further configured to: in the first state, when a timer of the first state expires, leave the first state, and receive one or more pieces of information; or
in the first state, leave the first state when receiving no wake-up information in N consecutive paging occasions, and receive the one or more pieces of information, where N is a positive integer, N indicates a maximum quantity of consecutive paging occasions for the terminal device, and the wake-up information indicates to leave the first state.

In a possible implementation, in the first state, intra-frequency measurement, inter-frequency measurement, cell measurement, and/or cell reselection are not performed.

In a possible implementation, the transceiver module 1101 is further configured to send a first request message to the access network device. The first request message is used to request to configure the first state. The first request message includes one or more pieces of the following information: a request for configuration of duration of a timer of the first state, or a request for configuration of the N paging occasions. A destination of the first request message is the core network device.

The transceiver module 1101 is further configured to receive first configuration information from the access network device. The first configuration information includes one or more pieces of the following information: the duration of the timer of the first state, a group identifier of the terminal device, an identifier of the terminal device, or the N paging occasions. The first configuration information is determined by the core network device based on the first request message.

In a possible implementation, the transceiver module 1101 is further configured to send second information to the access network device. The second information indicates one or more pieces of the following information: information about whether configuration of the first state is supported; a processing delay after the wake-up information from the access network device is received; or a minimum time period from receiving the wake-up information from the access network device to receiving the paging message.

In a possible implementation, the first information further indicates one or more pieces of the following information: a cell identifier, and information about whether a cell determined by the cell identifier supports sending the wake-up information; or a frequency identifier, and information about whether a cell determined by the frequency identifier supports the terminal device in the first state.

In a possible implementation, the wake-up information includes one or more of the following: the identifier of the terminal device, an identifier of a group to which the terminal device belongs, or a paging probability range. The paging probability range indicates that a probability that the terminal device is paged falls within the range interval.

In a possible implementation, the processing module 1102 is further configured to: when entering an idle state from a connected state or entering an inactive state from a connected state, if the timer of the first state does not expire, enter the first state.

For another example, the transceiver module 1101 is configured to: send first information to a terminal device, where the first information indicates the terminal device to enter a first state.

The terminal device in the first state receives wake-up information. The terminal device in the first state skips receiving one or more pieces of the following information from the access network device: a paging message, a synchronization signal, or a system message.

The transceiver module 1101 is further configured to send the wake-up information to the terminal device, where the wake-up information indicates the terminal device to leave the first state. The terminal device that leaves the first state receives the one or more pieces of information from the access network device, or the terminal device initiates a random access request.

In a possible implementation, the terminal device in the first state skips performing intra-frequency measurement, inter-frequency measurement, cell measurement, and/or cell reselection.

In a possible implementation, the transceiver module 1101 is further configured to receive a first request message sent by the terminal device. The first request message is used to request to configure the first state. The first request message includes one or more pieces of the following information: a request for configuration of duration of a timer of the first state, or a request for configuration of N paging occasions.

The transceiver module 1101 is further configured to send the first request message to a core network device.

The transceiver module 1101 is further configured to receive first configuration information from the core network device, where the first configuration information is determined by the core network device based on the first request message.

The transceiver module 1101 is further configured to send the first configuration information to the terminal device. The first configuration information includes one or more pieces of the following information: the duration of the timer of the first state, a group identifier of the terminal device, an identifier of the terminal device, or the N paging occasions.

In a possible implementation, the transceiver module 1101 is further configured to receive second information sent by the terminal device. The second information indicates one or more pieces of the following information: information about whether the terminal device supports configuration of the first state; a processing delay after the terminal device receives the wake-up information from the access network device; or a minimum time period from receiving the wake-up information from the access network device to receiving the paging message.

In a possible implementation, the first information further indicates one or more pieces of the following information: a cell identifier, and information about whether a cell determined by the cell identifier supports sending the wake-up information; or a frequency identifier, and information about whether a cell determined by the frequency identifier supports the terminal device in the first state.

In a possible implementation, the wake-up information includes one or more of the following: the identifier of the terminal device, the group identifier of the terminal device, or a paging probability range. The paging probability range indicates that a probability that the terminal device is paged falls within the range interval.

For another example, the transceiver module 1101 is configured to: send first information to a terminal device, where the first information indicates the terminal device to enter a first state.

The terminal device in the first state receives wake-up information. The terminal device in the first state skips receiving one or more pieces of the following information from the access network device: a paging message, a synchronization signal, or a system message.

The terminal device in the first state leaves the first state when a timer of the first state expires, and receives the one or more pieces of information; or
the terminal device in the first state leaves the first state when receiving no wake-up information from the access network device in N consecutive paging occasions, and receives the one or more pieces of information, where N is a positive integer, N indicates a maximum quantity of consecutive paging occasions for the terminal device, and the wake-up information indicates to leave the first state.

In a possible implementation, the terminal device in the first state skips performing intra-frequency measurement, inter-frequency measurement, cell measurement, and/or cell reselection.

In a possible implementation, the transceiver module 1101 is further configured to receive a first request message sent by the terminal device. The first request message is used to request to configure the first state. The first request message includes one or more pieces of the following information: a request for configuration of duration of the timer of the first state, or a request for configuration of the N paging occasions.

The transceiver module 1101 is further configured to send the first request message to a core network device.

The transceiver module 1101 is further configured to receive first configuration information from the core network device, where the first configuration information is determined by the core network device based on the first request message.

The transceiver module 1101 is further configured to send the first configuration information to the terminal device. The first configuration information includes one or more pieces of the following information: the duration of the timer of the first state, a group identifier of the terminal device, an identifier of the terminal device, or the N paging occasions.

In a possible implementation, the transceiver module 1101 is further configured to receive second information sent by the terminal device. The second information indicates one or more pieces of the following information: information about whether the terminal device supports configuration of the first state; a processing delay after the terminal device receives the wake-up information from the access network device; or a minimum time period from receiving the wake-up information from the access network device to receiving the paging message.

In a possible implementation, the first information further indicates one or more pieces of the following information: a cell identifier, and information about whether a cell determined by the cell identifier supports sending the wake-up information; or a frequency identifier, and information about whether a cell determined by the frequency identifier supports the terminal device in the first state.

In a possible implementation, the wake-up information includes one or more of the following: the identifier of the terminal device, the group identifier of the terminal device, or a paging probability range. The paging probability range indicates that a probability that the terminal device is paged falls within the range interval.

For another example, the transceiver module 1101 is configured to receive a first request message from an access network device, where the first request message requests to configure duration of a timer of a first state, or requests to configure N paging occasions, and N is a positive integer.

A terminal device in the first state skips receiving one or more pieces of the following information from the access network device: a paging message, a synchronization signal, or a system message, or the terminal device in the first state leaves the first state when the timer of the first state expires, and receives the one or more pieces of information.

The processing module 1102 is configured to determine first configuration information based on the first request message, where the first configuration information includes one or more pieces of the following information: the duration of the timer of the first state, a group identifier of the terminal device, an identifier of the terminal device, or the N paging occasions.

The transceiver module 1101 is further configured to send the first configuration information to the access network device.

In a possible implementation, the terminal device in the first state skips performing intra-frequency measurement, inter-frequency measurement, cell measurement, and/or cell reselection.

In a possible implementation, the paging message is sent to the access network device, where the paging message indicates the access network device to indicate, by using wake-up information, the terminal device to leave the first state.

In a possible implementation, the processing module 1102 is a processor.

In a possible implementation, the processing module 1102 is a processor, and the transceiver module 1101 is a transmitter, a receiver, or a low-power transceiver circuit.

Further, an embodiment of this application further provides a computer program product. When the computer program product runs on a network device, the network device is enabled to perform the method performed by the switch in the method embodiments corresponding to FIG. 6 to FIG. 10.

An embodiment of this application further provides a chip system, including a processor and an interface circuit. The interface circuit is configured to receive instructions and transmit the instructions to the processor. The processor is configured to implement the method in any one of the foregoing method embodiments.

Optionally, the chip system further includes a memory. There may be one or more processors in the chip system. The processor may be implemented by hardware, or may be implemented by software. When the processor is implemented by hardware, the processor may be a logic circuit, an integrated circuit, or the like. When the processor is implemented by software, the processor may be a general-purpose processor, and the method in any one of the foregoing method embodiments is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

The foregoing describes embodiments of this application in detail. Steps in the methods in embodiments of this application may be sequentially scheduled, combined, or deleted based on an actual requirement. Modules in the apparatus in embodiments of this application may be divided, combined, or deleted based on an actual requirement.

It should be understood that "one embodiment" or "an embodiment" mentioned in this specification means that particular features, structures, or characteristics related to the embodiment are included in at least one embodiment of this application. Therefore, "in one embodiment" or "in an embodiment" appearing throughout this specification does not necessarily refer to a same embodiment. In addition, these particular features, structures, or characteristics may be combined in one or more embodiments in any appropriate manner. It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected depending on actual requirements to achieve the objectives of the solutions in the embodiments.

In addition, functional units in embodiments of this application may be integrated into one processing module, or each of the units may exist alone physically, or two or more units are integrated into one unit. The integrated unit may be implemented in a form of hardware, or may be implemented in a form of a software functional unit.

## Claims

1. A communication method applied to a terminal device, comprising:
receiving first information from an access network device;
entering a first state based on the first information;
receiving, in the first state, wake-up information from the access network device, and skipping receiving, in the first state, one or more pieces of the following information from the access network device: a paging message, a synchronization signal, or a system message; and
leaving the first state based on the wake-up information, and receiving the one or more pieces of information from the access network device; or leaving the first state based on the wake-up information, and initiating a random access request.

2. A communication method applied to a terminal device, comprising:
receiving first information from an access network device;
entering a first state based on the first information; and
in the first state, when a timer of the first state expires, leaving the first state, and receiving one or more pieces of information; or
in the first state, leaving the first state when receiving no wake-up information in N consecutive paging occasions, and receiving the one or more pieces of information, wherein N is a positive integer, N indicates a maximum quantity of consecutive paging occasions for the terminal device, and the wake-up information indicates to leave the first state.

3. The method according to claim 1 or 2, wherein
in the first state, skipping performing intra-frequency measurement, inter-frequency measurement, cell measurement, and/or cell reselection.

4. The method according to any one of claims 1 to 3, wherein before the receiving first information from an access network device, the method further comprises:
sending a first request message to the access network device, wherein the first request message is used to request to configure the first state, the first request message comprises one or more pieces of the following information: a request for configuration of duration of the timer of the first state, or a request for configuration of the N paging occasions, and a destination of the first request message is a core network device; and
receiving first configuration information from the access network device, wherein the first configuration information comprises one or more pieces of the following information: the duration of the timer of the first state, a group identifier of the terminal device, an identifier of the terminal device, or the N paging occasions, and the first configuration information is determined by the core network device based on the first request message.

5. The method according to any one of claims 1 to 4, wherein the method further comprises:
sending, by the terminal device, second information to the access network device, wherein the second information indicates one or more pieces of the following information:
information about whether configuration of the first state is supported;
a processing delay after the wake-up information from the access network device is received; or
a minimum time period from receiving the wake-up information from the access network device to receiving the paging message.

6. The method according to any one of claims 1 to 5, wherein the first information further indicates one or more pieces of the following information:
a cell identifier, and information about whether a cell determined by the cell identifier supports sending the wake-up information; or
a frequency identifier, and information about whether a cell determined by the frequency identifier supports the terminal device in the first state.

7. The method according to any one of claims 1 to 6, wherein the wake-up information comprises one or more of the following: the identifier of the terminal device, an identifier of a group to which the terminal device belongs, or a paging probability range, and the paging probability range indicates that a probability that the terminal device is paged falls within the range interval.

8. The method according to any one of claims 3 to 7, wherein
when entering an idle state from a connected state or entering an inactive state from a connected state, if the timer of the first state does not expire, entering the first state.

9. A communication method applied to an access network device, comprising:
sending first information to a terminal device, wherein the first information indicates the terminal device to enter a first state, wherein
the terminal device in the first state receives wake-up information, and the terminal device in the first state skips receiving one or more pieces of the following information from the access network device: a paging message, a synchronization signal, or a system message; and
sending the wake-up information to the terminal device, wherein the wake-up information indicates the terminal device to leave the first state, and the terminal device that leaves the first state receives the one or more pieces of information from the access network device, or the terminal device initiates a random access request.

10. A communication method applied to an access network device, comprising:
sending first information to a terminal device, wherein the first information indicates the terminal device to enter a first state, wherein
the terminal device in the first state receives wake-up information, and the terminal device in the first state skips receiving one or more pieces of the following information from the access network device: a paging message, a synchronization signal, or a system message; and
the terminal device in the first state leaves the first state when a timer of the first state expires, and receives the one or more pieces of information; or
the terminal device in the first state leaves the first state when receiving no wake-up information from the access network device in N consecutive paging occasions, and receives the one or more pieces of information, wherein N is a positive integer, N indicates a maximum quantity of consecutive paging occasions for the terminal device, and the wake-up information indicates to leave the first state.

11. The method according to claim 9 or 10, wherein
the terminal device in the first state skips performing intra-frequency measurement, inter-frequency measurement, cell measurement, and/or cell reselection.

12. The method according to any one of claims 9 to 11, wherein before the sending first information to a terminal device, the method further comprises:
receiving a first request message sent by the terminal device, wherein the first request message is used to request to configure the first state, and the first request message comprises one or more pieces of the following information: a request for configuration of duration of the timer of the first state, or a request for configuration of the N paging occasions;
sending the first request message to a core network device;
receiving first configuration information from the core network device, wherein the first configuration information is determined by the core network device based on the first request message; and
sending the first configuration information to the terminal device, wherein the first configuration information comprises one or more pieces of the following information: the duration of the timer of the first state, a group identifier of the terminal device, an identifier of the terminal device, or the N paging occasions.

13. The method according to any one of claims 9 to 12, wherein the method further comprises:
receiving second information sent by the terminal device, wherein the second information indicates one or more pieces of the following information:
information about whether the terminal device supports configuration of the first state;
a processing delay after the terminal device receives the wake-up information from the access network device; or
a minimum time period from receiving the wake-up information from the access network device to receiving the paging message.

14. The method according to any one of claims 9 to 13, wherein the first information further indicates one or more pieces of the following information:
a cell identifier, and information about whether a cell determined by the cell identifier supports sending the wake-up information; or
a frequency identifier, and information about whether a cell determined by the frequency identifier supports the terminal device in the first state.

15. The method according to any one of claims 9 to 14, wherein the wake-up information comprises one or more of the following: the identifier of the terminal device, the group identifier of the terminal device, or a paging probability range, and the paging probability range indicates that a probability that the terminal device is paged falls within the range interval.

16. A communication method applied to a core network device, comprising:
receiving a first request message from an access network device, wherein the first request message requests to configure duration of a timer of a first state, or requests to configure N paging occasions, and N is a positive integer, wherein
a terminal device in the first state skips receiving one or more pieces of the following information from the access network device: a paging message, a synchronization signal, or a system message, or the terminal device in the first state leaves the first state when the timer of the first state expires, and receives the one or more pieces of information;
determining first configuration information based on the first request message, wherein the first configuration information comprises one or more pieces of the following information: the duration of the timer of the first state, a group identifier of the terminal device, an identifier of the terminal device, or the N paging occasions; and
sending the first configuration information to the access network device.

17. The method according to claim 16, wherein the terminal device in the first state skips performing intra-frequency measurement, inter-frequency measurement, cell measurement, and/or cell reselection.

18. The method according to claim 16 or 17, wherein
sending the paging message to the access network device, wherein the paging message indicates the access network device to indicate, by using wake-up information, the terminal device to leave the first state.

19. A terminal device, comprising:
a transceiver module, configured to receive first information from an access network device;
a processing module, configured to enter a first state based on the first information, wherein the transceiver module is further configured to: receive, in the first state, wake-up information from the access network device, and skip receiving, in the first state, one or more pieces of the following information from the access network device: a paging message, a synchronization signal, or a system message; and
the processing module is further configured to: leave the first state based on the wake-up information, and receive the one or more pieces of information from the access network device; or leave the first state based on the wake-up information, and initiate a random access request.

20. A terminal device, comprising:
a transceiver module, configured to receive first information from an access network device;
a processing module, configured to enter a first state based on the first information, wherein
the processing module is further configured to: in the first state, when a timer of the first state expires, leave the first state, and receive one or more pieces of information; or
in the first state, leave the first state when receiving no wake-up information in N consecutive paging occasions, and receive one or more pieces of information, wherein N is a positive integer, N indicates a maximum quantity of consecutive paging occasions for the terminal device, and the wake-up information indicates to leave the first state.

21. The terminal device according to claim 19 or 20, wherein the terminal device in the first state skips performing intra-frequency measurement, inter-frequency measurement, cell measurement, and/or cell reselection.

22. The terminal device according to any one of claims 19 to 21, wherein
the transceiver module is further configured to send a first request message to the access network device, wherein the first request message is used to request to configure the first state, the first request message comprises one or more pieces of the following information: a request for configuration of duration of the timer of the first state, or a request for configuration of the N paging occasions, and a destination of the first request message is a core network device; and
the transceiver module is further configured to receive first configuration information from the access network device, wherein the first configuration information comprises one or more pieces of the following information: the duration of the timer of the first state, a group identifier of the terminal device, an identifier of the terminal device, or the N paging occasions, and the first configuration information is determined by the core network device based on the first request message.

23. The terminal device according to any one of claims 19 to 22, wherein
the transceiver module is further configured to send second information to the access network device, wherein the second information indicates one or more pieces of the following information:
information about whether configuration of the first state is supported;
a processing delay after the wake-up information from the access network device is received; or
a minimum time period from receiving the wake-up information from the access network device to receiving the paging message.

24. The terminal device according to any one of claims 19 to 23, wherein the first information further indicates one or more pieces of the following information:
a cell identifier, and information about whether a cell determined by the cell identifier supports sending the wake-up information; or
a frequency identifier, and information about whether a cell determined by the frequency identifier supports the terminal device in the first state.

25. The terminal device according to any one of claims 19 to 24, wherein the wake-up information comprises one or more of the following: the identifier of the terminal device, an identifier of a group to which the terminal device belongs, or a paging probability range, and the paging probability range indicates that a probability that the terminal device is paged falls within the range interval.

26. The terminal device according to any one of claims 21 to 25, wherein
the processing module is further configured to: when entering an idle state from a connected state or entering an inactive state from a connected state, if the timer of the first state does not expire, enter the first state.

27. An access network device, comprising:
a transceiver module, configured to send first information to a terminal device, wherein the first information indicates the terminal device to enter a first state, wherein
the terminal device in the first state receives wake-up information, and the terminal device in the first state skips receiving one or more pieces of the following information from the access network device: a paging message, a synchronization signal, or a system message; and
the transceiver module is further configured to send the wake-up information to the terminal device, wherein the wake-up information indicates the terminal device to leave the first state, and the terminal device that leaves the first state receives the one or more pieces of information from the access network device, or the terminal device initiates a random access request.

28. An access network device, comprising:
a transceiver module, configured to: send first information to a terminal device, wherein the first information indicates the terminal device to enter a first state, wherein
the terminal device in the first state receives wake-up information, and the terminal device in the first state skips receiving one or more pieces of the following information from the access network device: a paging message, a synchronization signal, or a system message; and
the terminal device in the first state leaves the first state when a timer of the first state expires, and receives the one or more pieces of information; or
the terminal device in the first state leaves the first state when receiving no wake-up information from the access network device in N consecutive paging occasions, and receives the one or more pieces of information, wherein N is a positive integer, N indicates a maximum quantity of consecutive paging occasions for the terminal device, and the wake-up information indicates to leave the first state.

29. The access network device according to claim 27 or 28, wherein
the terminal device in the first state skips performing intra-frequency measurement, inter-frequency measurement, cell measurement, and/or cell reselection.

30. The access network device according to any one of claims 27 to 29, wherein
the transceiver module is further configured to receive a first request message sent by the terminal device, wherein the first request message is used to request to configure the first state, and the first request message comprises one or more pieces of the following information: a request for configuration of duration of the timer of the first state, or a request for configuration of the N paging occasions;
the transceiver module is further configured to send the first request message to a core network device;
the transceiver module is further configured to receive first configuration information from the core network device, wherein the first configuration information is determined by the core network device based on the first request message; and
the transceiver module is further configured to send the first configuration information to the terminal device, wherein the first configuration information comprises one or more pieces of the following information: the duration of the timer of the first state, a group identifier of the terminal device, an identifier of the terminal device, or the N paging occasions.

31. The access network device according to any one of claims 27 to 30, wherein
the transceiver module is further configured to receive second information sent by the terminal device, wherein the second information indicates one or more pieces of the following information:
information about whether the terminal device supports configuration of the first state;
a processing delay after the terminal device receives the wake-up information from the access network device; or
a minimum time period from receiving the wake-up information from the access network device to receiving the paging message.

32. The access network device according to any one of claims 27 to 31, wherein the first information further indicates one or more pieces of the following information:
a cell identifier, and information about whether a cell determined by the cell identifier supports sending the wake-up information; or
a frequency identifier, and information about whether a cell determined by the frequency identifier supports the terminal device in the first state.

33. The access network device according to any one of claims 27 to 32, wherein the wake-up information comprises one or more of the following: the identifier of the terminal device, the group identifier of the terminal device, or a paging probability range, and the paging probability range indicates that a probability that the terminal device is paged falls within the range interval.

34. A core network device, comprising:
a transceiver module, configured to receive a first request message from an access network device, wherein the first request message requests to configure duration of a timer of a first state, or requests to configure N paging occasions, and N is a positive integer, wherein
a terminal device in the first state skips receiving one or more pieces of the following information from the access network device: a paging message, a synchronization signal, or a system message, or the terminal device in the first state leaves the first state when the timer of the first state expires, and receives the one or more pieces of information; and
a processing module, configured to determine first configuration information based on the first request message, wherein the first configuration information comprises one or more pieces of the following information: the duration of the timer of the first state, a group identifier of the terminal device, an identifier of the terminal device, or the N paging occasions, wherein
the transceiver module is further configured to send the first configuration information to the access network device.

35. The core network device according to claim 34, wherein the terminal device in the first state skips performing intra-frequency measurement, inter-frequency measurement, cell measurement, and/or cell reselection.

36. The core network device according to claim 34 or 35, wherein
the paging message is sent to the access network device, wherein the paging message indicates the access network device to indicate, by using wake-up information, the terminal device to leave the first state.

37. A communication apparatus, wherein the communication apparatus comprises a processor,
wherein
the processor is configured to execute a computer program or instructions stored in a memory, to enable the communication apparatus to perform the method according to any one of claims 1 to 8, enable the communication apparatus to perform the method according to any one of claims 9 to 15, or enable the communication apparatus to perform the method according to any one of claims 16 to 18.

38. A computer-readable storage medium, wherein the computer-readable storage medium has program instructions, and when the program instructions are directly or indirectly executed, the method according to any one of claims 1 to 8, the method according to any one of claims 9 to 15, and/or the method according to any one of claims 16 to 18 is implemented.

39. A chip system, wherein the chip system comprises at least one processor, the processor is configured to execute a computer program or instructions stored in a memory, and when the computer program or the instructions is/are executed in the at least one processor, any one of the method according to any one of claims 1 to 8, the method according to any one of claims 9 to 15, and/or the method according to any one of claims 16 to 18 is implemented.

40. A communication system, comprising a plurality of terminal devices according to any one of claims 19 to 26, the access network device according to any one of claims 27 to 33, and a plurality of core network devices according to any one of claims 34 to 36.
